# EUROPÄISCHE PATENTSCHRIFT

(11) **EP 3 615 458 B1**
(45) Veröffentlichungstag und Bekanntmachung des Hinweises auf die Patenterteilung: **26.02.2025**
(21) Anmeldenummer: 18721309.5
(22) Anmeldetag: 23.04.2018
(51) Int. Cl.: B65G 1/08, B65G 47/57

(54) **UMSETZEINRICHTUNG**
TRANSFER DEVICE
DISPOSITIF DE TRANSFERT

(30) Priorität: 25.04.2017 DE 202017102428 U
(43) Veröffentlichungstag der Anmeldung: 04.03.2020
(73) Patentinhaber: KUKA Systems GmbH, 86165 Augsburg (DE)
(72) Erfinder: BROCKHOFF, Per-Olaf, 86316 Friedberg (DE); SONNTAG, Toni, 86159 Augsburg (DE); LAUTER, Simon, 86415 Mering (DE)
(74) Vertreter: ERNICKE Patent- und Rechtsanwälte PartmbB
(86) Internationale Anmeldenummer: PCT/EP2018/060287
(87) Internationale Veröffentlichungsnummer: WO 2018/197384

(56) Entgegenhaltungen:
- EP-A1- 1 785 224
- DE-B3- 102015 214 195
- DE-U1- 202012 102 447
- DE-U1- 202012 102 447
- DE-U1- 202013 101 531
- DE-U1- 202013 101 531
- JP-A- 2015 040 132
- JP-A- H09 136 715

## Beschreibung

Die Erfindung betrifft eine Umsetzeinrichtung für eine Zuführeinrichtung.

Eine solche Umsetzeinrichtung ist aus der WO 2014/006014 A1 und DE 20 2012 102 447 U1 bekannt. Die Umsetzeinrichtung ist für eine Zuführeinrichtung mit unterschiedlich geneigten Führungsbahnen und mit einem mobilen, mit den Führungsbahnen verbindbaren Bauteilträger für ein Bauteil vorgesehen. Die Umsetzeinrichtung weist eine manuell bedienbare Hubeinrichtung mit aufrechter Hubachse und einem an die Führungsbahnen fluchtend anschließbaren Bahnabschnitt der Führungsbahnen auf.

Die DE 20 2013 101 531 U1 zeigt eine Umsetzeinrichtung für eine Zuführeinrichtung mit unterschiedlich geneigten Führungsbahnen und einem mobilen, mit den Führungsbahnen verbindbaren rollenden Bauteilträger für ein Bauteil, wobei die Umsetzeinrichtung eine manuell bedienbare Hubeinrichtung mit einer aufrechten linearen Hubachse und mit einem an die Führungsbahnen fluchtend anschließbaren Bahnabschnitt aufweist, wobei die Hubeinrichtung eine Basis mit einem daran höhenverstellbar angeordneten Hubelement aufweist, wobei der Bahnabschnitt schwenkbar am Hubelement gelagert ist, wobei die Umsetzeinrichtung einen mit der Basis verbundenen und mit dem Hubelement zusammenwirkenden Lageprüfer aufweist, wobei ein pneumatisches System die Bewegung eines an der Führungsbahn angeordneten Stoppers betätigt, wenn der Lageprüfer aktiviert ist.

Es ist Aufgabe der vorliegenden Erindung, eine verbesserte Umsetztechnik und Zuführtechnik aufzuzeigen.

Die Erfindung löst diese Aufgabe mit den Merkmalen im Hauptanspruch.

Die beanspruchte Umsetztechnik, d.h. die Umsetzeinrichtung sowie die damit ausgerüstete Zuführeinrichtung haben verschiedene Vorteile.

Die beanspruchte Umsetztechnik kann an bestehenden Zuführeinrichtungen nachgerüstet oder umgerüstet werden und kann auch in neue Zuführeinrichtungen integriert werden. Die Umsetztechnik kommt ohne externe Zuführung von Antriebsenergie, insbesondere elektrischem Strom oder fluidischem Druck, aus. Sie hat einen geringen Bau- und Steueraufwand. Durch den möglichen Entfall von motorischen oder fluidischen Antrieben können die Sicherheitsanforderungen niedrig gehalten werden, was die Konstruktion vereinfacht und verbilligt.

Die Umsetzeinrichtung, insbesondere deren Hubeinrichtung, kann von Hand bedient und betrieben werden. Ein ladbarer passiver Energiespeicher, insbesondere mit einem Gegengewicht, kann unterstützend mitwirken. Für einen Werker können besonders gute Ergonomiebedingungen bei der Bedienung und Beladung der Umsetzeinrichtung geboten werden. Außerdem kann die Umsetzeinrichtung, insbesondere deren Hubeinrichtung, für unterschiedliche dimensionierte Bauteilträger ohne größere Veränderungen genutzt werden.

Die lineare Hubeinrichtung mit aufrechter, insbesondere vertikaler, Hubachse benötigt wenig Stellplatz, lässt sich einfacher und besser nach- und umrüsten, bietet eine gute Zugänglichkeit und erleichtert die manuelle Bedienung. Die aufrechte Anordnung beinhaltet auch Schräglagen mit einer deutlich überwiegenden vertikalen Richtungskomponente.

Die Umsetzeinrichtung weist eine Hubeinrichtung mit einer Basis auf, an der ein gestellartiger Hubträger höhenverstellbar angeordnet und quer oder schräg zur aufrechten, linearen Hubachse ausgerichtet ist. Der gestellartige Hubträger kann als Hubbühne ausgebildet sein. Er weist eine Schwenkeinrichtung auf, mittels der ein Bahnabschnitt schwenkbar am Hubträger gelagert ist. Der Hubträger kann die Schwenkeinrichtung und den Bahnabschnitt abstützen sowie und auf und ab bewegen. Der Hubträger kann dabei zwischen einer oberen und einer unteren Hubposition oder Endlage gehoben und gesenkt werden. Er schließt an diesen Hubpositionen jeweils an eine Zuführbahn an.

Der Hubträger kann weitere vorteilhafte Funktionen für die bevorzugt automatische Neigungsanpassung des Bahnabschnitts an zumindest eine der unterschiedlich geneigten Führungsbahnen, für den Anschluss an einen passiven Energiespeicher sowie für eine Positionierung und Verriegelung an den Führungsbahnen haben. Der Hubträger ist vorzugsweise auf einer aufrechten Hubstütze angeordnet, die an der Basis entlang einer linearen Hubachse höhenverstellbar geführt ist.

Die Umsetzeinrichtung weist eine mit der Basis verbundene und mit dem Hubträger zusammenwirkende Steuerplattform auf, die an einer Führungsbahn angeordnet werden kann. Dies ist vorzugsweise die von der Umsetzeinrichtung bzw. der Steuerplattform ausgehende und abwärts gerichtete Führungsbahn, insbesondere Zuführbahn.

Die Steuerplattform kann verschiedene Funktionen für eine automatische oder manuelle Neigungsanpassung des Bahnabschnitts, für die Anordnung und Funktion des Energiespeichers, für die Steuerung der Bauteilträgerbewegung etc. haben.

Die Schwenkeinrichtung kann in einer Variante durch das Eigengewicht des Bahnabschnitts sowie des Bauteilträgers und durch Anschläge betätigt werden. Hierbei kann die Schwenkeinrichtung die Neigung des Bahnabschnitts automatisch an die Neigung der jeweiligen Führungsbahn anpassen. Die Schwenkeinrichtung kann in einer anderen Variante durch das Eigengewicht des Bahnabschnitts sowie des Bauteilträgers und durch einen Griff, insbesondere einen Schwenkgriff, betätigt werden. Mittels des Griffs kann der Bahnabschnitt manuell geschwenkt und an die Neigung der jeweiligen Führungsbahn angepasst werden.

Hierfür ist in beiden Varianten nur ein sehr geringer Bauaufwand erforderlich, wobei die Zuführung von externer Energie, z.B. von elektrischem Strom, Fluiddruck oder dgl., für die Betätigung der Schwenkeinrichtung entbehrlich ist. Der Antrieb der Schwenkeinrichtung kann durch das besagte Eigengewicht und durch die Hubbewegung des Hubträgers sowie ggf. manuell erfolgen.

Die Anschläge können am Hubträger und an der Steuerplattform angeordnet sein. Eine außermittige Schwenkachse der Schwenkeinrichtung ermöglicht zusammen mit Anschlägen eine Neigungsanpassung des Bahnabschnitts beim Auffahren eines Bauteilträgers und durch dessen Eigengewicht. Die Schwenklage des Bahnabschnitts kann durch eine steuerbare Arretierung, vorzugsweise ein Schwenkstütze, gesichert werden. Der Bahnabschnitt und der aufgeladene Bauteilträger behalten dadurch während der Hubbewegung des Hubträgers ihre Neigung.

In einer Variante kann durch einen stationären Steller, der vorzugsweise an der Steuerplattform angeordnet ist, die Arretierung im Bereich der anderen Führungsbahn gelöst und die Änderung der Schwenklage bzw. die Neigungsanpassung an die andere Führungsbahn durch stationäre Anschläge, vorzugsweise an der Steuerplattform, erreicht werden. Nach Abgabe des Bauteilträgers kann auf dem Hubweg und/oder an der einen Führungsbahn dann wieder die andere Schwenklage selbsttägig wieder hergestellt werden.

In einer anderen Variante kann der Bahnabschnitt bei der Hubbewegung und an der Steuerplattform zunächst seine Neigung behalten. Diese ist z.B. an die Neigung der anderen Zuführbahn, insbesondere Rücklaufbahn, angepasst. Die beibehaltene Neigung kann auch durch das Eigengewicht des Bahnabschnitts und ggf. des aufgeladenen Bauteilträgers bestimmt sein.

Diese Neigung hat verschiedene Vorteile. Das Beibehalten der Neigung ist günstig für die Kinematik der Hubbewegung und für die optimale Energie- und Kraftausnutzung bei dieser Bewegung. Bei Entfall einer automatischen Neigungsanpassung sind die hierfür benötigten Kraftableitungen entbehrlich. Die besagte Neigung ist günstig für das Beladen eines auf dem Bahnabschnitt befindlichen Bauteilträgers mit Bauteilen. Sie ist insbesondere vorteilhaft für die Ergonomie bei einer manuellen Beladung. Außerdem ist durch die besagte Neigung der Bauteilträger auf dem Bahnabschnitt gegen unbeabsichtigtes Wegrollen gesichert. An der Steuerplattform kann der Bahnabschnitt dann von Hand oder auf andere Weise geschwenkt und an die Neigung der angrenzenden Führungsbahn angepasst. Hierdurch kann der z.B. beladene Bauteilträger auf die Führungsbahn abrollen. Dies kann durch sein Eigengewicht und ggf. nach Lösen des steuerbaren Stoppers erfolgen.

Ein passiver Energiespeicher kann auf den Hubträger bei dessen auf- und abwärts gerichteten Hubbewegungen unterstützend einwirken. Er kann hierfür mittels einer Übersetzung und einem Treibmittel, z.B. einem Riemen oder einer Kette, mit dem Hubträger direkt oder mittelbar verbunden sein. Der passive Energiespeicher kommt ohne eine externe Energiezuführung, insbesondere ohne Zufuhr von elektrischem Strom oder Fluiddruck, aus. Der passive Energiespeicher kann die potenzielle Energie des mit einem Bauteilträger beladenen Hubträgers bei der Hubbewegung in der einen Richtung speichern und kann nach Abgabe des Bauteilträgers den leeren Hubträger dann wieder bei der Hubbewegung in die andere Richtung zumindest unterstützend antreiben. Der passive Energiespeicher kann diese Hubbewegung alleine bewirken und antreiben. Alternativ kann der Bediener die Hubbewegung mit Handkraft bewirken, wobei der passive Energiespeicher unterstützend wirkt und den Bediener entlastet.

In der bevorzugten Ausführungsform ist der Energiespeicher auf das Gewicht des Bauteilträgers entsprechend abgestimmt. Die unterstützende Kraft des passiven Energiespeichers entspricht z.B. dem Gewicht des Hubträgers und einem Teil, z.B. der Hälfte, des Gewichts des Bauteilträgers. Bei einer solchen Auslegung kann der passive Energiespeicher alleine und ohne Krafteinsatz des Bedieners die besagte Hubbewegung antreiben. Der passive Energiespeicher kann in beliebig geeigneter Weise, insbesondere mit einem Gegegengewicht, ausgebildet sein.

In einer bevorzugten Ausführungsform der Erfindung ist die für den Vorlauf der beladenen Bauteilträger vorgesehene Zuführbahn unterhalb der für den Rücklauf der leeren Bauteilträger vorgesehenen Führungsbahn angeordnet. Bei entsprechender Auslegung des passiven Energiespeichers kann der Hubträger mit dem aufgeladenen Bauteilträger nach unten fahren und dabei den Energiespeicher laden, wobei nach Abgabe des Bauteilträgers an die untere Zuführbahn der Energiespeicher den Hubträger wieder automatisch nach oben zu der für den Rücklauf vorgesehenen Zuführbahn anheben kann.

Diese Hubbewegungen können selbsttätig und ohne Krafteinwirkung durch einen Werker oder Bediener erfolgen. Ferner kann ein Bauteilträger wahlweise in der oberen oder der unteren Hubposition mit ein oder mehreren Bauteilen beladen werden. Die Hubbewegung des Hubträgers kann bedarfsweise mittels einer Dämpfeinrichtung gebremst bzw. gedämpft werden. Dies ist insbesondere von Vorteil, wenn der Bauteilträger in der obereren Hubposition beladen wird und bei der Hubbewegung dann ein höheres Gewicht als bei einem leeren Bauteilträger wirkt. Die Dämpfeinrichtung kann eine geeignete konstruktive Ausbildung haben, z.B. als fluidischer Dämpfer, Wirbelstrombremse oder dgl.. Die Dämpfeinrichtung kann zur Anpassung an unterschiedliche Gewichte und Hubgeschwindigkeiten verstellbar sein. Sie kann sich z.B. selbsttätig an unterschiedliche Gewichte und Hubgeschwindigkeiten anpassen.

Die Dämpfeinrichtung kann direkt auf den Hubträger oder die Hubstütze einwirken und damit gekoppelt sein. Die Dämpfeinrichtung kann zusätzlich oder alternativ auf den passiven Energiespeicher, z.B. dessen Treibmittel und/oder dessen Übersetzung, einwirken und damit gekoppelt sein.

Die Dämpfeinrichtung kann auch für die Hubbewegung, insbesondere in einer gewünschten Richtung, unterstützend wirken. Hierfür eignet sich z.B. eine fluidische Dämpfeinrichtung mit einer ggf. einstellbaren Drosselanordnung. Die Drosselanordnung kann in verschiedene Hubrichtungen unterschiedlich eingestellt werden, um z.B. richtungsbezogen unterschiedliche Dämpfwirkungen zu erzielen. Insbesondere kann die Drosselwirkung für eine Hubbewegung des leeren Hubträgers kleiner sein als für eine Hubbewegung des mit einem Bauteilträger beladenen Hubträgers. Dies lässt sich auch mit anderen Arten von Dämpfeinrichtungen erzielen.

Eine Dämpfeinrichtung, insbesondere eine fluidische Dämpfeinrichtung, kann auch eine resultierende Druckkraft erzeugen. Sie kann als Kraftunterstützung für den passiven Energiespeicher ausgebildet sein und wirken. Die Kraftunterstützung kann einstellbar sein, z.B. durch die Einbaulage eines Zylinders.

Eine Positioniereinrichtung und eine Riegeleinrichtung können den Hubträger automatisch und selbsttätig in der oberen und unteren Hubstellung an den Führungsbahnen positionieren und fixieren. Die Positioniereinrichtung kann mit einem Positioniermittel auf die Positionierung und Fixierung des Bauteilträgers am Bahnabschnitt einwirken. Hierüber kann die Lage des Bauteilträgers am Bahnabschnitt während der Hubbewegung gesichert werden. Die Positioniereinrichtung und die Riegeleinrichtung können selbsttätig an der oberen und unteren Hubposition wirken. Der Werker kann durch eine geeignete Bedieneinrichtung bedarfsgerecht für eine Freigabe sorgen.

Für die Bewegungen des Bauteilträgers ist eine Steuereinrichtung vorhanden. Diese kann zum einen eine Vereinzelungseinrichtung an der für den Rücklauf vorgesehenen Zuführbahn aufweisen, mit der ankommende Bauteilträger zum Aufladen am Bahnabschnitt vereinzelt werden, wobei der nächstfolgende Bauteilträger gestoppt wird. Ferner weist die Steuereinrichtung einen steuerbaren Stopper auf, der an der Steuerplattform angeordnet ist, und der einen mit Bauteilen beladenen Bauteilträger erst nach Durchlaufen einer Sicherheitsprüfung vollautomatisch und/oder durch manuelle Bedienung freigibt.

Die beanspruchte Umsetztechnik ist vor allem für den Einsatz an einer Beladestelle von Vorteil, an der ein Werker einen Bauteilträger manuell mit ein oder mehreren Bauteilen belädt. Eine solche Beladung kann alternativ oder zusätzlich halb- oder vollautomatisch durch eine Handhabungseinrichtung, insbesondere einen Roboter, erfolgen. Alternativ kann die Umsetzeinrichtung auch an einer Endladestelle eingesetzt werden, an der beladene Bauteilträger manuell, halb automatisch oder vollautomatisch entladen werden.

Die beanspruchte Umsetztechnik eignet sich besonders für die beanspruchte Zuführeinrichtung und deren Ausgestaltung mit rollenden Bauteilträgern. Für das Aufnehmen und Abgeben der Bauteilträger auf und von dem Bahnabschnitt ist es günstig, wenn stationäre und bevorzugt schienenartige Führungsmittel am Bahnabschnitt und an den Zuführbahnen angeordnet sind und der Bauteilträger Rollkörper, insbesondere Räder, als Gleitmittel aufweist.

Durch eine gegenseitig angepasste unebene Kontur der Gleit- und Führungsmittel kann ein Bauteilträger besonders sicher und lagegenau auf den Bahnabschnitt auffahren und abfahren. Er kann dabei auch eine definierte und sichere Lage bei der Beladung einnehmen. Für das eigenständige und nur durch Schwerkraft getriebene Auf- und Abfahren des Bauteilträgers ist es außerdem günstig, wenn die Zuführeinrichtung eine generatorische Bremseinrichtung für mindestens eine Rolle oder ein Rad, aufweist. Das Auf- und Abfahren erfolgt mit einer niedrigen Geschwindigkeit und kann weitgehend widerstandsfrei geschehen. Die generatorische Bremse wird erst bei einer Erhöhung der Fahrgeschwindigkeit entlang der Zuführbahnen wirksam und entfaltet hier gezielt die gewünschte Bremsfunktion.

Die beanspruchte Bearbeitungsstation hat den Vorteil, dass die Zuführeinrichtung mit der beanspruchten Umsetztechnik optimal für die gesicherte Zuführung von Bauteilen in einen von einer Schutzeinrichtung abgeschirmten inneren Stationsbereich eingesetzt werden kann. Durch die Umsetztechnik kann sichergestellt werden, dass die Bauteilträger exakt und führungsgenau von der Rücklauf-Zuführbahn aufgenommen und auf die Zulauf-Führungsbahn abgegeben werden, so dass sie mit ihren Bauteilen in korrekter Lage und mit der gewünschten Sicherheit die Schutzeinrichtung passieren können.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Bearbeitungsstation mit einer Zuführeinrichtung und einer Umsetzeinrichtung für Bauteilträger in einer Seitenansicht,
- Figur 2 und 3:: die Umsetzeinrichtung von Figur 1 in einer ersten Variante und in einer unteren Hubstellung in verschiedenen perspektivischen Ansichten,
- Figur 4:: die Umsetzeinrichtung von Figur 3 in einer oberen Hubstellung,
- Figur 5 und 6:: Seitenansicht der Umsetzeinrichtung in der oberen und unteren Hubstellung,
- Figur 7 und 8:: Detailansichten von Figur 5 und 6,
- Figur 9:: eine abgebrochene Seitenansicht einer Vereinzelungseinrichtung für einen Bauteilträger,
- Figur 10:: eine Seitenansicht einer Riegeleinrichtung und einer Bedieneinrichtung gemäß Pfeil X von Figur 4,
- Figur 11:: eine Draufsicht einer Führungsbahn, eines Hubträgers mit einem Bauteilabschnitt,
- Figur 12:: eine perspektivische Ansicht eines Hubträgers mit einem Bauteilabschnitt und einer Steuerplattform,
- Figur 13:: die Umsetzeinrichtung von Figur 1 in einer zweiten Variante in perspektivischer Ansicht,
- Figur 14:: die Umsetzeinrichtung von Figur 13 in einer Seitenansicht,
- Figur 15:: die Umsetzeinrichtung von Figur 13 in einer perspektivischer Draufsicht
- Figur 16 und 17:: die Umsetzeinrichtung von Figur 13 mit einem Gehäuse in perspektivischen Ansichten,
- Figur 18 und 19:: die Umsetzeinrichtung von Figur 13 in einer unteren und oberen Hubstellung,
- Figur 20 und 21:: eine Dämpfeinrichtung mit einem fluidischen Zylinder in zwei Ausführungen.

Die Erfindung betrifft eine Umsetzeinrichtung (14) für Bauteilträger (4) an einer Zuführeinrichtung (1). Die Erfindung betrifft ferner eine mit einer Umsetzeinrichtung (14) ausgerüstete Zuführeinrichtung (1) sowie eine Bearbeitungsstation (2) mit einer solchen Zuführeinrichtung (1) und einer Umsetzeinrichtung (14).

Die Umsetzeinrichtung (14) dient zum Umsetzen von Bauteilträgern (4) zwischen unterschiedlich geneigten Führungsbahnen (6,7) einer Zuführeinrichtung (1). Die Umsetzeinrichtung (14) ist eine technisch und wirtschaftlich eigenständige Vorrichtung. Sie kann an einer bestehenden Zuführeinrichtung (1) nachgerüstet oder umgerüstet werden. Sie kann auch integraler Bestandteil einer Zuführeinrichtung (1) sein.

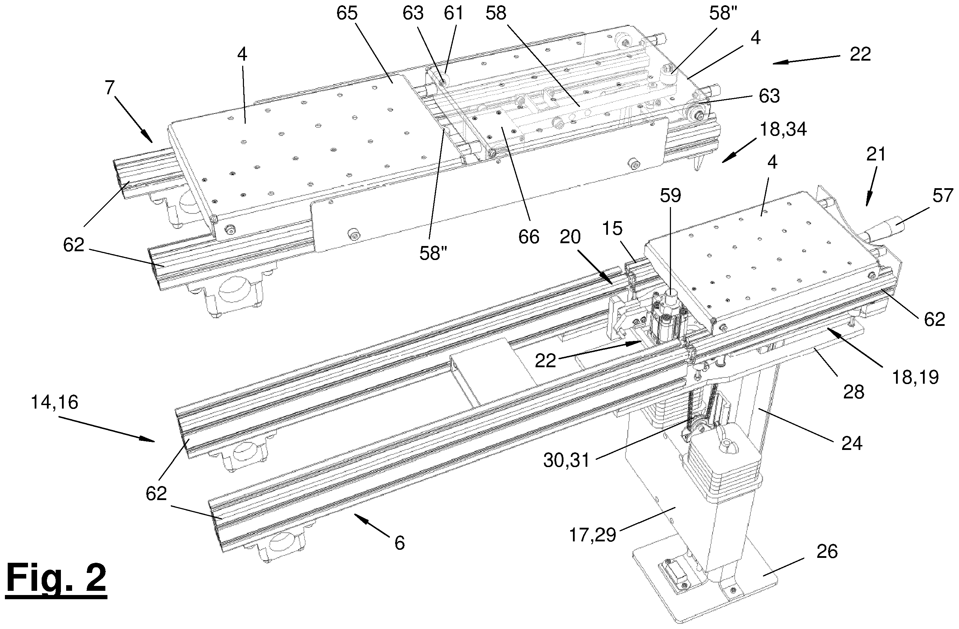

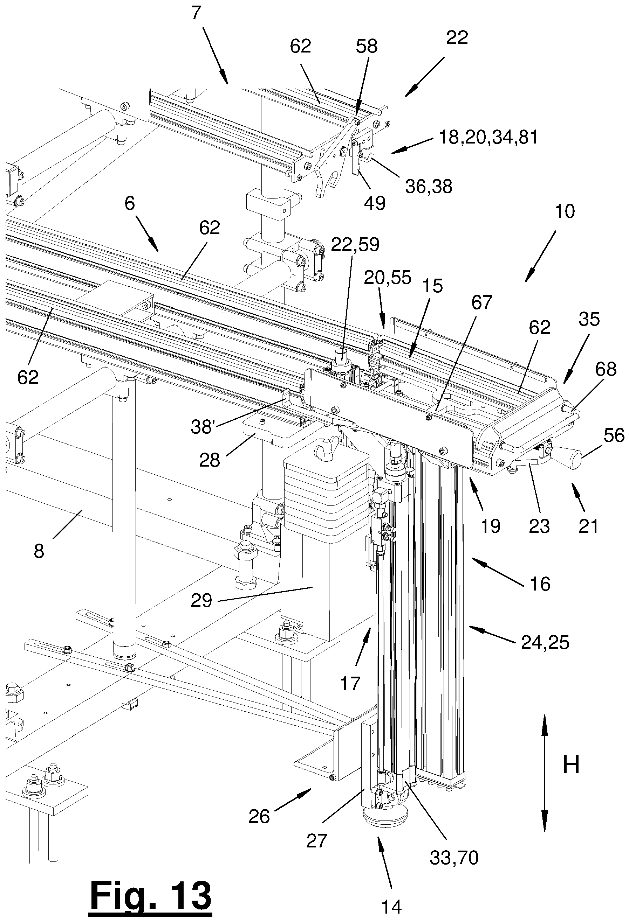

Die Umsetzeinrichtung (14) kann unterschiedlich ausgebildet sein. In Figur 2 bis 12 ist eine erste Variante und in Figur 13 bis 19 eine zweite Variante der Umsetzeinrichtung (14) dargestellt.

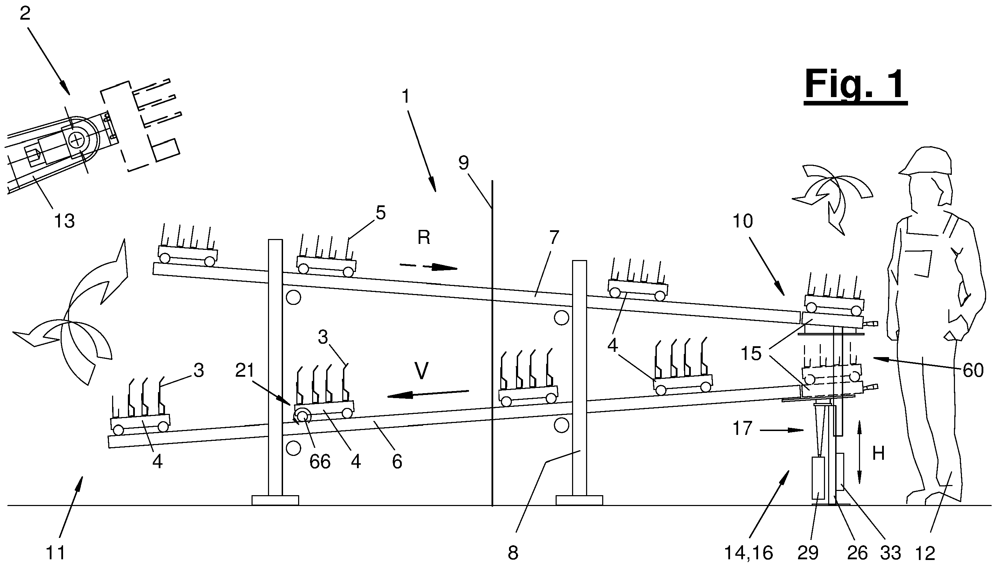

Figur 1 zeigt in einer schematischen Seitenansicht eine Zuführeinrichtung (1) an einer Bearbeitungsstation (2). Diese ist aus Unfallschutzgründen von einer Schutzeinrichtung (9), z.B. einem Zaun, umgeben. Die Zuführeinrichtung (1) dient der unfallsicheren Zuführung von Bauteilen (3) von außen in die Bearbeitungsstation (2) sowie zur Bearbeitungseinrichtung (13) und erstreckt sich durch eine entsprechend konturierte Öffnung in der Schutzeinrichtung (9). Die Beladestelle (10) befindet sich außerhalb und die Entladestelle (11) innerhalb der Schutzeinrichtung (9).

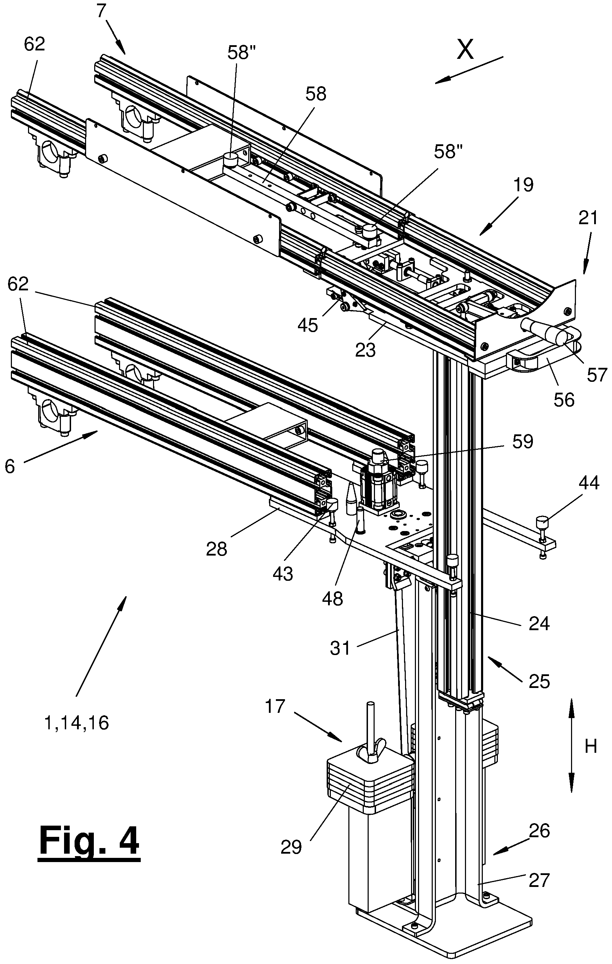

Die Zuführeinrichtung (1) weist mindestens eine Führungsbahn (6) für beladene Bauteilträger (4) auf, die sich von einer Beladestelle (10) zu einer Entladestelle (11) erstreckt und die eine schräg abwärts gerichtete Neigung besitzt. Figur 2 und 4 zeigen eine solche Führungsbahn (6) in einer abgebrochenen und perspektivischen Ansicht. Die Führungsbahn (6) ist an einem Gestell (8) angeordnet und kann in ihrer Neigung einstellbar sein. Sie hat eine endliche Länge und vorzugsweise eine gerade Erstreckung. Das Bahnende an der Beladestelle (10) liegt höher als das Bahnende an der Entladestelle (11). Die Führungsbahn (6) fungiert hierbei als Zuführbahn oder Zulaufbahn für beladene Bauteilträger (4).

In der in Figur 1 gezeigten Ausführungsform ist außerdem eine weitere Führungsbahn (7) vorhanden, die mit vertikalem Abstand über der Zuführbahn (6) angeordnet ist und die sich mit entgegen gesetzt gerichteter Neigung von der Entladestelle (11) zur Beladestelle (10) erstreckt. Sie dient als Rücklaufbahn (7) für den Rücktransport von leeren Bauteilträgern (4) zur Beladestelle (10) und ist ebenfalls am Gestell (8) angeordnet. Die Höhenanordnung kann auch vertauscht sein, wobei die Zuführbahn (6) über der Rückführbahn (7) angeordnet ist.

Die Rückführbahn (7) ist vorzugsweise konstruktiv gleichartig wie die Zuführbahn (6) ausgebildet. Die Führungsbahnen (6,7) können auch mehrfach vorhanden sein. In Figur 1 markieren Pfeile (V,R) die Vorlauf- und Rücklaufrichtung. Bei einer solchen Zuführeinrichtung (1) mit Zuführ- und Rücklaufbahn(en) (6,7) bewegen sich die Bauteilträger (4) in einem Kreislauf, wobei sie an der Belade- und Entladestelle (10,11) jeweils von einer Führungsbahn auf die andere umgesetzt werden. An der Entladestelle (11) kann dies automatisiert geschehen, z.B. durch den andeutungsweise gezeigten Roboter (13) mit der Greifeinrichtung. Alternativ kann eine eigene Umsetzeinrichtung vorhanden sein.

Für den Bauteiltransport sind ein oder mehrere mobile Bauteilträger (4) vorgesehen, die mit den Führungsbahnen (6,7) lösbar verbunden sind und sich an diesen durch Schwerkraft und ihr Eigengewicht sowie das Bauteilgewicht entlang bewegen. Der oder die Bauteilträger (4) können Bestandteil der Zuführeinrichtung (1) sein.

Die Bauteilträger (4) weisen eine oder mehrere feste oder ggf. wechselbare Bauteilaufnahmen (5) für jeweils ein oder mehrere Bauteile (3) auf. Vorzugsweise handelt es sich um Karosseriebauteile für Fahrzeug-Rohkarosserien, insbesondere um Blechteile. Die Bauteile (3) können von beliebiger Art und Größe sein. Sie können untereinander gleich oder unterschiedlich sein. Die Bauteile (3) werden an der Beladestelle (10) von einem Werker (12) auf den oder die Bauteilträger (4) geladen. An der Endladestelle (11) folgt eine vorzugsweise automatisierte Endladung mittels einer Bearbeitungseinrichtung (13), die z.B. einen in Figur 1 gezeigten mehrachsigen Roboter mit einer Greifeinrichtung aufweisen kann.

Der oder die Bauteilträger (4) und die Führungsbahn (6) weisen zusammenwirkende Gleit- und Führungsmittel (61,62) auf. Die Gleitmittel (61) sind als Rollkörper, insbesondere als Räder, und die Führungsmittel (62) als Schienen ausgebildet. Die Gleitmittel (61) bzw. Rollkörper befinden sich z.B. an dem oder den Bauteilträgern (4), wobei die Führungsmittel (62), insbesondere paarweise angeordnete Schienen, an den Führungsbahnen (6,7) angeordnet sind. Die Zuordnung kann alternativ umgekehrt sein, wobei die Führungsbahnen (6,7) als Rollenbahn ausgeführt sind. In einer weiteren Variante können der oder die Bauteilträger (4) und die Führungsbahnen (6,7) sowohl Gleitmittel (61), als auch Führungsmittel (62) mit jeweils wechselseitigem Eingriff aufweisen.

Die Führungsbahn (6) kann an ihrem zur Endladestelle (11) gelegenen Endbereich eine Positioniereinrichtung aufweisen, mit der die ankommenden Bauteilträger (4) gestoppt und entladegerecht positioniert werden können. Außerdem kann an der Positioniereinrichtung bei einer evtl. Staubildung von mehreren Bauteilträgern (4) eine Vereinzelung mit der besagten anschließenden Positionierung statt finden.

An der Beladestelle (10) weist die Zuführeinrichtung (1) eine vom Werker (12) manuell bedienbare Umsetzeinrichtung (14) zum Umsetzen eines bevorzugt einzelnen Bauteilträgers (4) von der einen auf die andere Führungsbahn (6,7), vorzugsweise von der Rücklaufbahn (7) auf die Zuführbahn (6), auf.

Die Umsetzeinrichtung (14) weist in beiden Varianten jeweils eine Hubeinrichtung (16) auf, mit der ein endseitiger Bahnabschnitt (15) der Führungsbahnen (6,7) mitsamt einem ggf. auf dem Bahnabschnitt (15) angeordneten Bauteilträger (4) entlang einer aufrechten Hubachse (H) gehoben und gesenkt wird. Die Hubachse (H) hat eine vertikale Ausrichtung, wobei aber auch eine Schräglage mit einer überwiegend vertikalen Richtungskomponente möglich ist. Die Hubachse (H) ist vorzugsweise linear ausgebildet. Bei der Hebe- und Senkbewegung entlang der Hubachse (H) wird der Bahnabschnitt (15) zwischen einer oberen und einer unteren Hubposition bewegt, wobei er in diesen Hubpositionen jeweils fluchtend an die Neigung der dortigen Führungsbahn (6,7) anschließen kann. Der Bahnabschnitt (15) ist vorzugsweise ein Endabschnitt der Führungsbahnen (6,7) und ist in gleicher Weise wie diese ausgebildet.

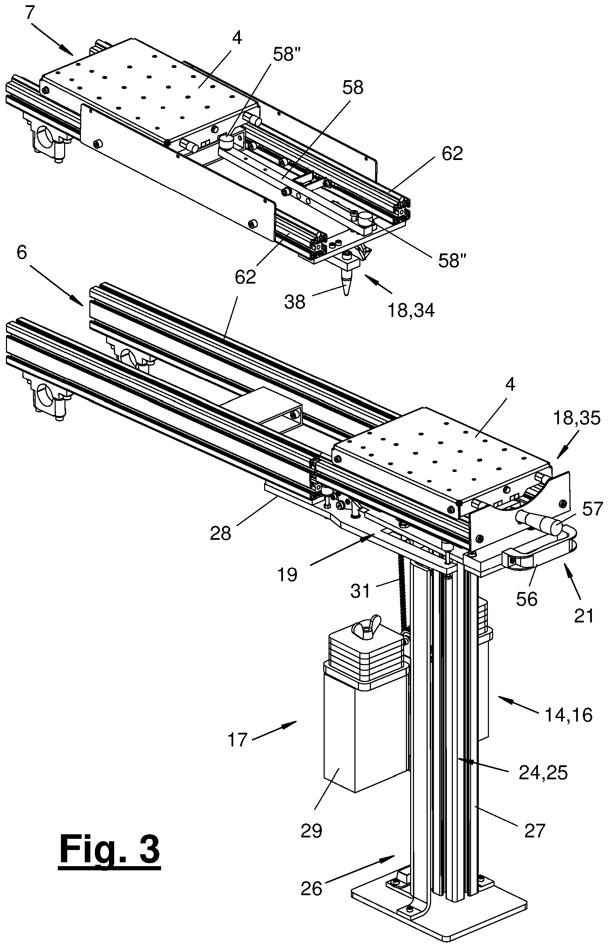

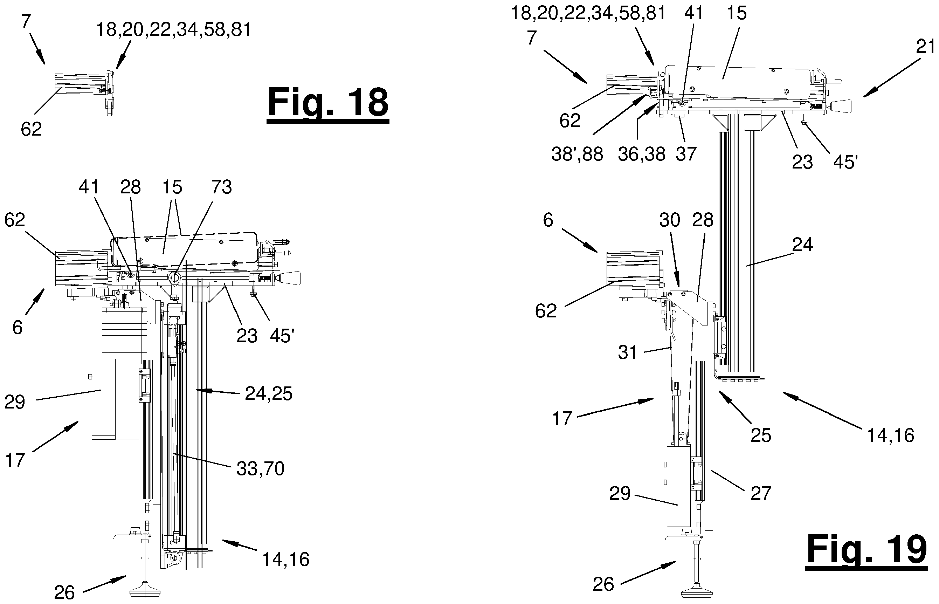

Bei der Umsetzeinrichtung (14) nimmt der Bahnabschnitt (15) in der oberen Hubposition einen leeren Bauteilträger (4) von der Rücklaufbahn (7) auf und bewegt ihn nach unten zu der unteren Hubposition an der Zuführbahn (6), an die der Bauteilträger (4) dann wieder übergeben werden kann. Der Werker (12) kann den Bauteilträger (4) in einer der beiden Hubpositionen oder Endlagen oder auch in einer Zwischenstellung auf dem Hubweg mit ein oder mehreren Bauteilen (3) beladen. Figur 3 und 4 sowie 5 und 6 zeigen bei der ersten Variante jeweils die beiden Hubpositionen oder Endlagen. Bei der zweiten Variante sind die beiden Hubpositionen oder Endlagen in Figur 18 und 19 dargestellt.

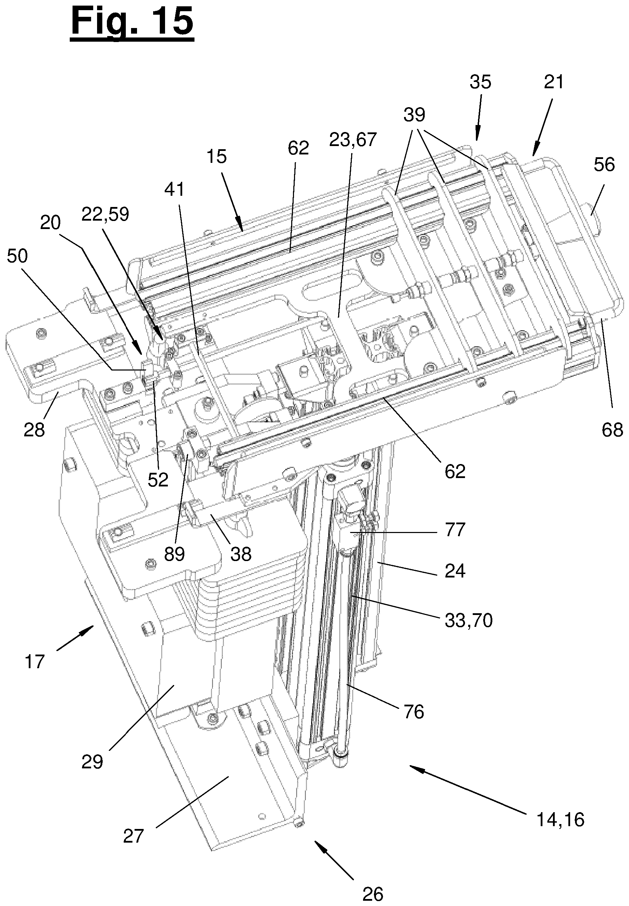

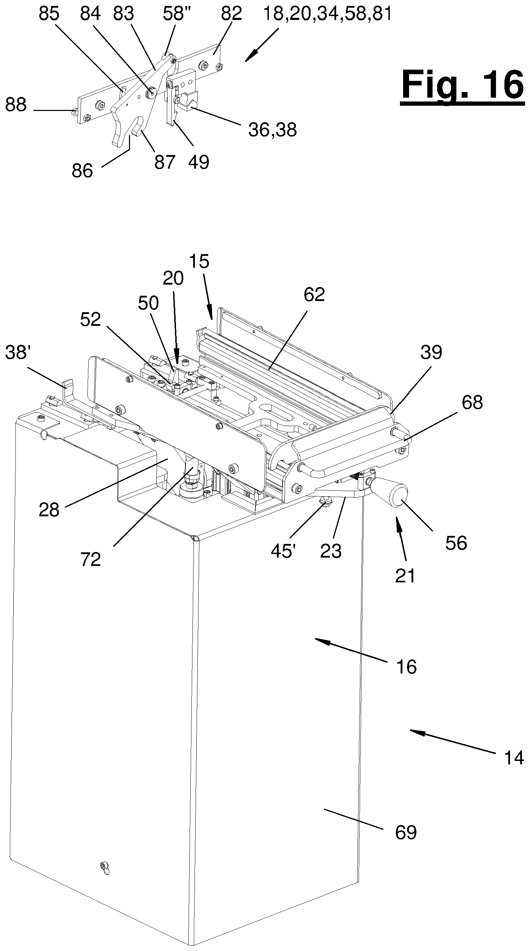

Die Hubeinrichtung (16) weist in beiden Varianten jeweils eine Basis (26) mit einem daran höhenverstellbaren Hubträger (23) auf. Die Basis weist z.B. einen Fuß und einen aufrechten Ständer (27) auf. Der Hubträger (23) ist gestellartig ausgebildet. Vorzugsweise hat er die Form einer Hubbühne. Diese kann gemäß Figur 4, 11 und 12 der ersten Variante sowie Figur 15 und 16 der zweiten Variante eine platten- oder rahmenartige Form haben. Der Hubträger (23) ist quer oder schräg zur Hubachse (H) ausgerichtet.

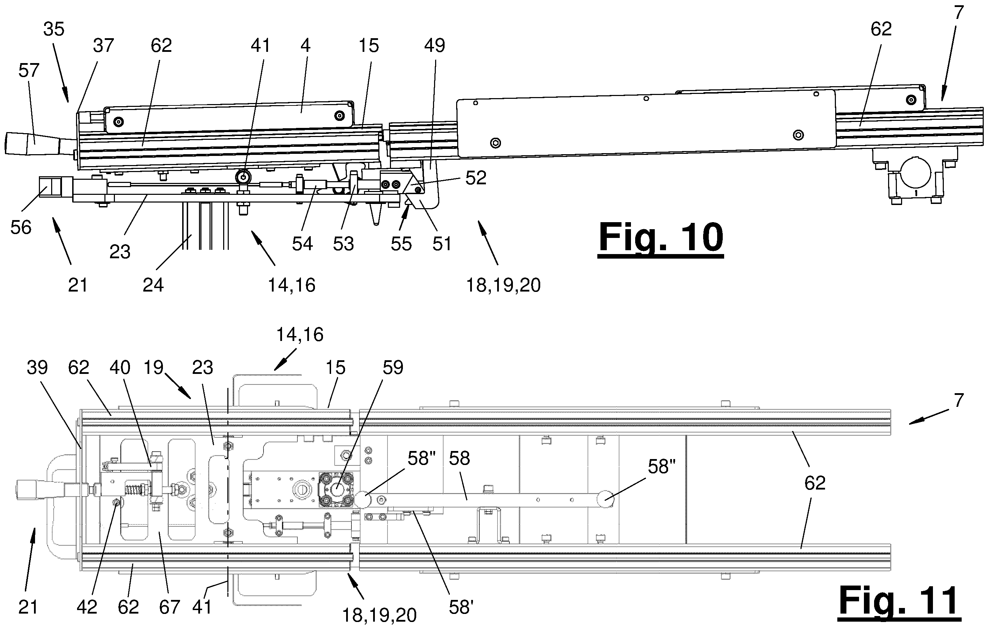

Der Bahnabschnitt (15) weist zwei parallele Führungsmittel (62), insbesondere Schienen, auf. Diese ragen jeweils seitlich über den benachbarten Rand des Hubträgers (23) hinaus. Die beiden Führungsmittel (62) können gemäß Figur 11 und 12 sowie Figur 13 durch ein Verbindungsmittel (67), z.B. Stege oder einen Rahmen, untereinander querverbunden sein.

Der Hubträger (23) kann an der Basis (26), insbesondere an deren Ständer (27), direkt oder mittelbar gelagert und mittels einer Führungseinrichtung (25) höhenverstellbar geführt sein. Die Führungseinrichtung (25) ist leichtgängig und ist z.B. als Wälzlagerführung, insbesondere als Kugelumlaufführung, ausgebildet.

In den gezeigten Ausführungsbeispielen ist der Hubträger (23) an einer aufrechten Hubstütze (24) angeordnet. Beispielsweise ist er auf deren oberem Kopfende aufgesetzt und befestigt. Die aufrechte, bevorzugt vertikale, Hubstütze (24) ist an der Basis (26), insbesondere an deren Ständer (27) oder an einer Dämpfeinrichtung (33), entlang der Hubachse (H) höhenverstellbar geführt. Die Hubstütze (24) kann als genutetes und metallisches Hohlprofil ausgeführt sein. Sie ist mit dem Hubträger (23) an dessen mittleren Bereich in geeigneter Weise verbunden.

Die Hubeinrichtung (16) weist in beiden Varianten jeweils eine Schwenkeinrichtung (19) für den Bahnabschnitt (15) auf. Mittels dieser Schwenkeinrichtung (19) ist der Bahnabschnitt (15) schwenkbar am Hubträger (23) gelagert. Die meisten Teile der Schwenkeinrichtung (19) sind am Hubträger (23) angeordnet.

Die Umsetzeinrichtung (14) weist ferner eine Steuerplattform (28) auf, die mit der Basis (26) verbunden ist und mit dem Hubträger (23) zusammenwirkt. Die Steuerplattform (28) ist im Bereich einer Führungsbahn (6,7), vorzugsweise an der Zuführbahn (6), angeordnet. Im gezeigten Ausführungsbeispiel ist die Steuerplattform (28) an der Oberseite der Basis (26), insbesondere an deren Ständer (27), stationär ausgeordnet und montiert. Die Steuerplattform (28) ist ebenfalls quer oder schräg zur Hubachse (H) ausgerichtet. Sie weist einen gabelförmigen Endbereich auf, der einen Durchtritt der Hubstütze (24) ermöglicht.

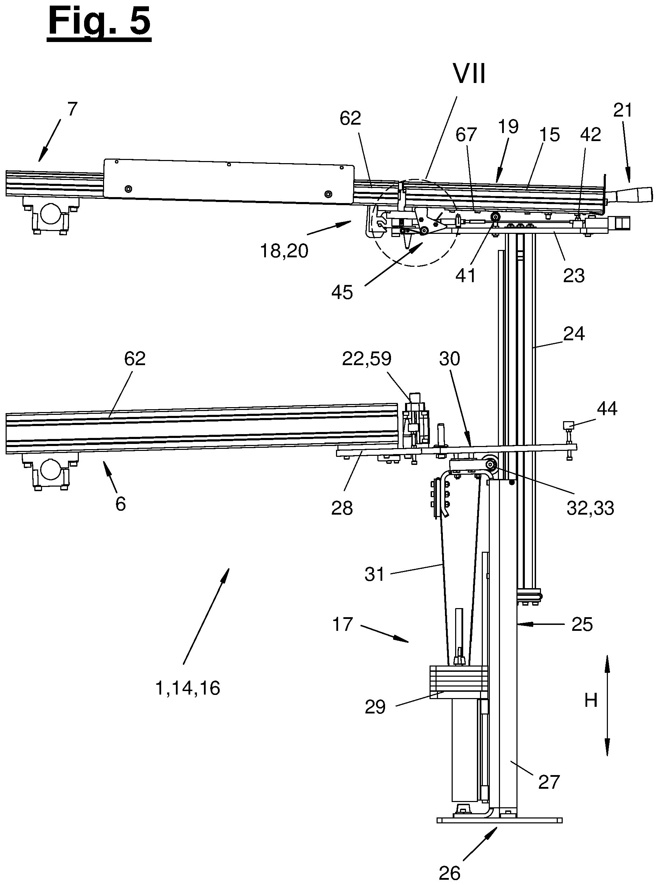

Die Schwenkeinrichtung (19) wird in der ersten Variante durch das Eigengewicht des Bauteilträgers (4) und durch ein oder mehrere mobile Anschläge (42) am Hubträger (23) sowie durch ein oder mehrere stationäre Anschläge (43,44) an der Steuerplattform (28) betätigt. Die Anschläge (42,43,44) können verstellbar sein. Z.B. ist gemäß Figur 5 und 11 ein einzelner mobiler Anschlag (42) zwischen dem Hubträger (23) und dem Verbindungsmittel (67) angeordnet. An der Steuerplattform (28) sind vier stationäre Anschläge (43,44) im Viereck derart angeordnet, das sie seitlich am Hubträger (23) vorbei greifen und die Führungsmittel (62) des Bahnabschnitts (15) kontaktieren können.

Die Schwenkeinrichtung (19) passt die Neigung des Bahnabschnitts (15) automatisch in der jeweiligen Hubposition oder Endlage an die Neigung der dortigen Führungsbahn (6,7) an.

Die Schwenkeinrichtung (19) weist gemäß Figur 5, 6 und 11 eine Schwenkachse (41) für den Bahnabschnitt (15) auf, die im mittleren Bereich des Bahnabschnitts (15) und dabei vorzugsweise in Längsrichtung der Führungsmittel (62) außermittig angeordnet ist. Die liegende, insbesondere horizontale, Schwenkachse (41) ist näher an dem zu den Führungsbahnen (6,7) weisenden Ende des Bahnabschnitts (15) angeordnet. Ein an der Rücklaufbahn (7) auflaufender Bauteilträger (4) drückt durch sein Eigengewicht den exzentrisch gelagerten Bahnabschnitt (15) automatisch mit dem hinteren und von der Führungsbahn (7) abgewandten Ende nach unten bis zum Kontakt mit einem dortigen mobilen Anschlag (42). Der Bahnabschnitt (15) nimmt dadurch eine Schräglage ein, in der er gemäß Figur 10 mit der Rücklaufbahn (7) und ihrer Schräglage fluchtet.

Die Schwenkeinrichtung (19) weist ferner eine steuerbare Arretierung (45) für diese Schwenklage des Bahnabschnitts (15) auf. Sie stützt den Bahnabschnitt (15) und seine Führungsmittel (62) an dem vorderen und zur Führungsbahn (7) hingewandten Ende ab. Die Arretierung (45) kann in der anderen, unteren Hubposition oder Endlage wieder gelöst werden, um dort eine andere und mit der dortigen Führungsbahn (6) fluchtende Schwenklage des Bahnabschnitts (15) zu ermöglichen. Die Arretierung (45) kann auch benutzt werden, um die vorerwähnte Schwenklage an der oberen Hubposition einzustellen.

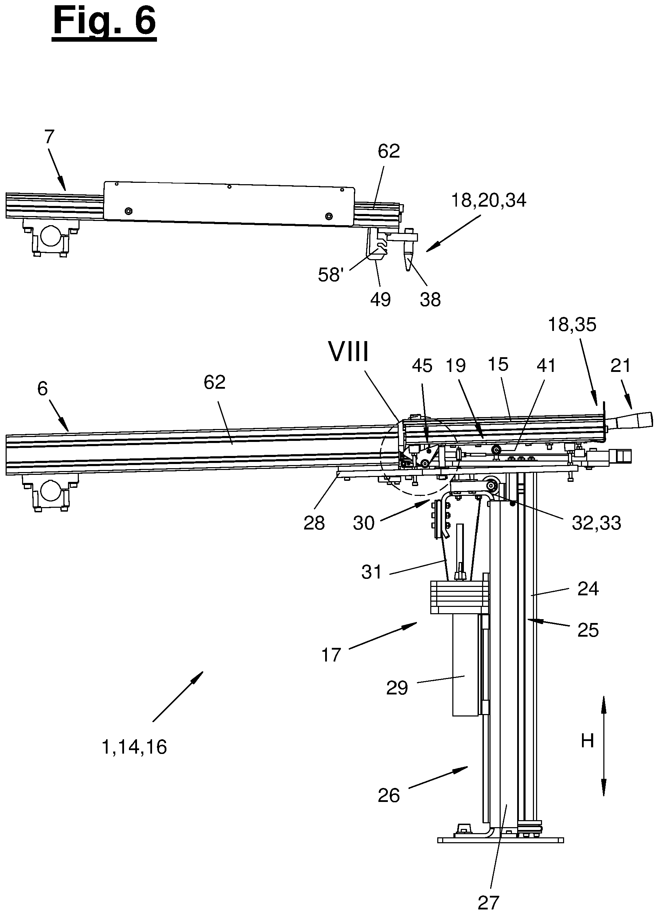

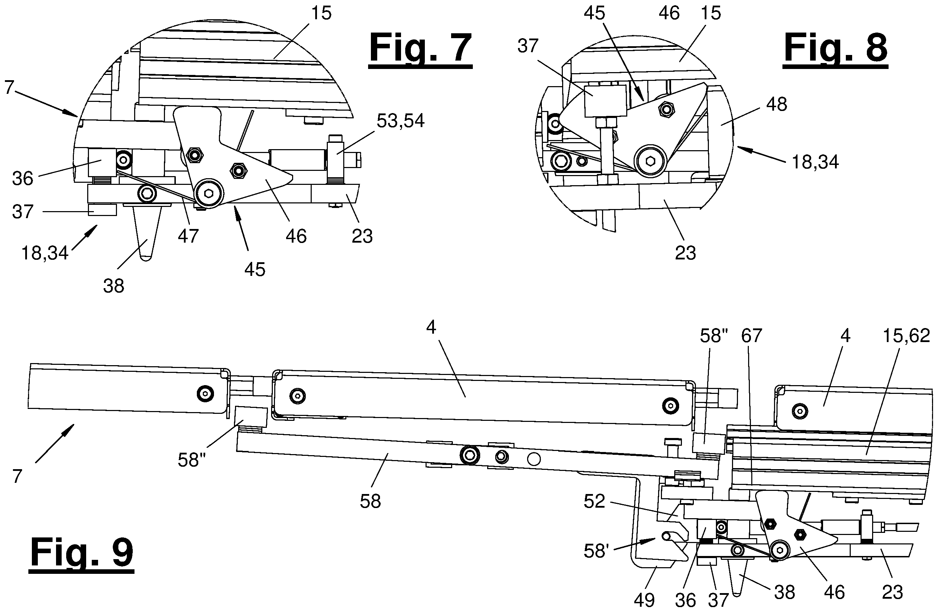

Die Arretierung (45) kann unterschiedlich ausgebildet sein. In der gezeigten ersten Ausführungsform gemäß Figur 5 und 6 sowie der Detaildarstellungen von Figur 7 und 8 weist die steuerbare Arretierung (45) eine Schwenkstütze (46) mit einer rückstellenden Feder (47) und einem stationären Steller (48) zur Einstellung ihrer Schwenklagen auf. Die Schwenkstütze (46) weist zwei ca. im rechten Winkel zueinander ausgerichtete Arme auf. Sie ist um eine zentrale Drehachse am Armübergang schwenkbar am Hubträger (23) gelagert. Die Feder (47) drückt die Schwenkstütze (46) in die in Figur 5 und 7 gezeigte Schwenk- und Stützstellung, in der der eine endseitig abgeflachte Stützarm den Bahnabschnitt (15), insbesondere dessen Verbindungsmittel (67) untergreift und abstützt. Ein Endanschlag kann diese Schwenk- und Stützlage sichern. Die Schwenk- und Stützlage kann durch Federkraft während der Hubbewegung und/oder in der oberen Hubposition eingenommen werden.

In der unteren Hubposition wird die Arretierung (45) durch Wegdrehen der Schwenkstütze (46) in die andere, in Figur 6 und 8 gezeigte, Schwenklage gelöst. Hierfür ist an der Steuerplattform (28) ein Steller (48) angeordnet, der gegen den anderen, quer abstehenden Arm der Schwenkstütze (46) drückt und diese in die Lösestellung dreht. Der Steller (48) ist z.B. als hochstehender Stift an der Steuerplattform (28) ausgebildet und angeordnet.

Bei der ersten Variante und bei gelöster Arretierung (45) können in der unteren Hubstellung die stationären Anschläge (43,44) wirksam werden, wobei sie den Bahnabschnitt (15) in eine andere Schwenklage drehen, in der die Führungsmittel (62) des Bahnabschnitts (15) und der Führungsbahn (6) bevorzugt die gleiche Neigung haben und miteinander fluchten. Figur 3 und 6 verdeutlichen diese Stellung, in welcher der in Figur 3 angedeutete Bauteilträger (4) durch sein Eigengewicht abfahren kann.

Die Umsetzeinrichtung (14), insbesondere die Hubeinrichtung (16), weist einen passiven Energiespeicher (17) auf, der auf den Hubträger (23) bei dessen Hubbewegungen bedarfsweise unterstützend einwirkt. Der Energiespeicher (17) speichert bei der Senkbewegung des Hubträgers (23) die potentielle Energie und gibt sie zur Unterstützung der Hebebewegung wieder ab.

In den gezeigten Ausführungsformen weist der passive Energiespeicher (17) ein Speicherelement in Form eines Gegengewichts (29) auf, das an der Basis (26), insbesondere an deren Ständer (27), höhenverstellbar geführt ist. Das Gegengewicht (29) ist über ein Treibmittel (31) und eine Übersetzung (30) mit dem Hubträger (23) verbunden.

Für das Treibmittel (31) kann eine Umlenkung (32) vorgesehen sein. Hierdurch kann das biegeelastische Treibmittel (31) in seiner Erstreckung einmal oder mehrfach gebogen werden, wobei auch mehrere Strangabschnitte gebildet werden. Mittels der Umlenkung (32) kann z.B. nach dem Flaschenzug-Prinzip eine Übersetzung (30) gebildet werden. Eine Umlenkung (32) kann z.B. von einer oder mehreren frei drehbaren Rollen gebildet werden.

Der Energiespeicher (17), insbesondere das Gegengewicht (29), ist auf das Gewicht eines am Bahnabschnitt (15) aufgenommenen Bauteilträgers (4) abgestimmt. Die Abstimmung ist derart, dass der mit einem Bauteilträger (4) beladene Hubträger (23) ein größeres Gewicht als das über die Übersetzung (30) wirkende Gegengewicht (29) hat. Hierdurch senkt sich der Hubträger (23) selbsttätig ab, wobei über das Treibmittel (31) und die Übersetzung (30) das Gegengewicht (29) angehoben wird. Andererseits sind das Eigengewicht des Hubträgers (23) und der Hubstütze (24) kleiner als das übersetzte Gegengewicht (29), so dass nach Abgabe des Bauteilträgers (4) das sich abwärts bewegende Gegengewicht (29) den Hubträger (23) anhebt und in die obere Hubposition bewegt. Die vorgenannten Gewichtsabstimmungen können sich auf das Eigengewicht eines leeren Bauteilträgers (4) oder auch auf das Gewicht eines mit ein oder mehreren Bauteilen (3) beladenen Bauteilträgers (4) beziehen.

Das Treibmittel (31) kann in beliebig geeigneter Weise ausgebildet sein, z.B. als Kette oder als Treibriemen mit glatter oder gezahnter Oberfläche. Die Übersetzung (30) hat z.B. die besagte Wirkung eines Flaschenzugs und erlaubt eine Größen- und Wegoptimierung des Ausgleichsystems bzw. des Energiespeichers (17). Der Übersetzungsfaktor weicht von 1 ab und kann z.B. 1:2 oder auch 2:1 betragen.

Die Umlenkung (32) weist z.B. zwei Umlenkrollen auf, von denen eine mobil und am Gegengewicht (29) angeordnet ist, wobei die andere stationär an der Steuerplattform (28), insbesondere an deren Unterseite, oder an der Basis (26) angeordnet ist. Die Rollenzahl kann alternativ größer sein. Die freien Enden des Treibmittels (31) können mit der Hubstütze (24) und mit der Steuerplattform (28) bzw. der Basis (26) verbunden sein. In einer weiteren Abwandlung kann an der beweglichen Hubstütze (24) eine Umlenkrolle angeordnet sein.

Die Hubeinrichtung (16) kann eine Dämpfeinrichtung (33) für die Hubträgerbewegungen aufweisen. Die Dämpfeinrichtung (33) ist in Figur 1 und 5 schematisch angedeutet. Sie kann in unterschiedlicher Weise ausgebildet und angeordnet sein.

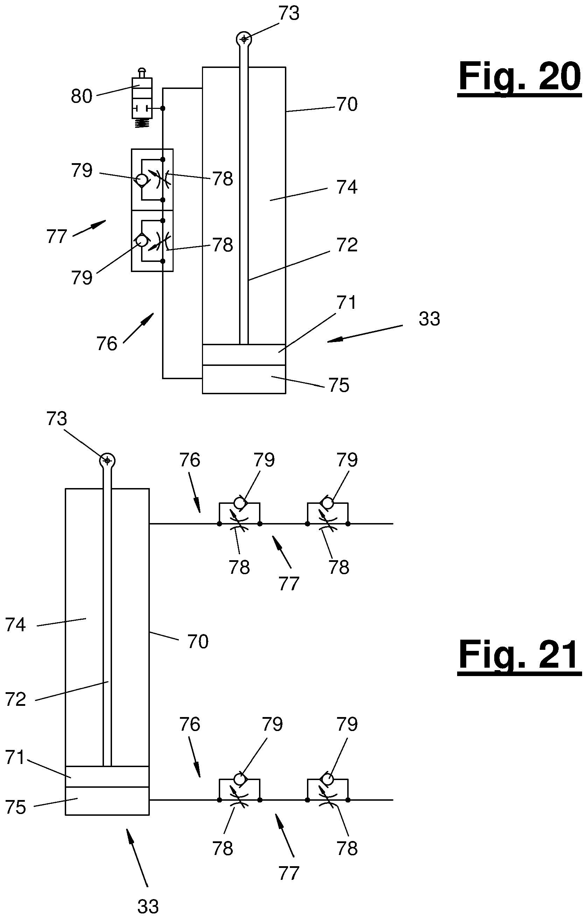

In einer Variante ist eine Ausbildung als Wirbelstrombremse und eine Anordnung an der Führungseinrichtung (25) und/oder an der Umlenkung (32), z.B. an der oberen und an der Steuerplattform (28) angeordneten Umlenkrolle möglich. In einer anderen Variante kann die Dämpfeinrichtung (33) als drosselbarer pneumatischer Zylinder ausgebildet sein, der mit dem Hubträger (23) oder der Hubstütze (24) verbunden ist. Dabei können die beidseits des Kolbens angeordneten Arbeitsräume des Zylinders jeweils über ein Drosselventil mit der äußeren Umgebung verbunden sein. Bei der Hebebewegungen in die obere Hubstellung kann die Drosselwirkung geringer als bei der Senkbewegung in die untere Hubposition sein. Dies ist insbesondere günstig, wenn der Bauteilträger (4) in der oberen Hubposition oder in einer Zwischenstellung mit ein oder mehreren Bauteilen (3) beladen wird. Nachfolgend werden in Bezugnahme auf Figur 20 und 21 verschiedene Ausführungsformen hierzu beschrieben.

Die Umsetzeinrichtung (14) weist eine Positioniereinrichtung (18) für den Hubträger (23) und/oder für den Bauteilträger (4) auf. Die Positioniereinrichtung (18) kann einerseits ein Positioniermittel (34) für die Positionierung des Hubträgers (23) an den Führungsbahnen (6,7) oder ggf. auch in einer Zwischenstellung (nicht dargestellt) aufweisen. Die Positioniereinrichtung (18) kann alternativ oder zusätzlich ein Positioniermittel (35) für die Positionierung und Fixierung des Bauteilträgers (4) am Bahnabschnitt (15) aufweisen. Die Positioniermittel (34,35) können einstellbar sein.

Für die Ausgestaltung und Anordnung der Positioniereinrichtung (18) gibt es unterschiedliche Möglichkeiten. In den gezeigten Ausführungsbeispielen kann das Positioniermittel (34) für die Hubeinrichtung Höhenpositionierungen (36,37) für die gewünschte und vorgegebene Hubposition an den Führungsbahnen (6,7) aufweisen. Das Positioniermittel (34) kann außerdem eine Seitenpositionierung (38) für die seitliche Ausrichtung des Hubträgers (23) und des Bahnabschnitts (15) an den Hubpositionen und evtl. an einer Zwischenstellung aufweisen.

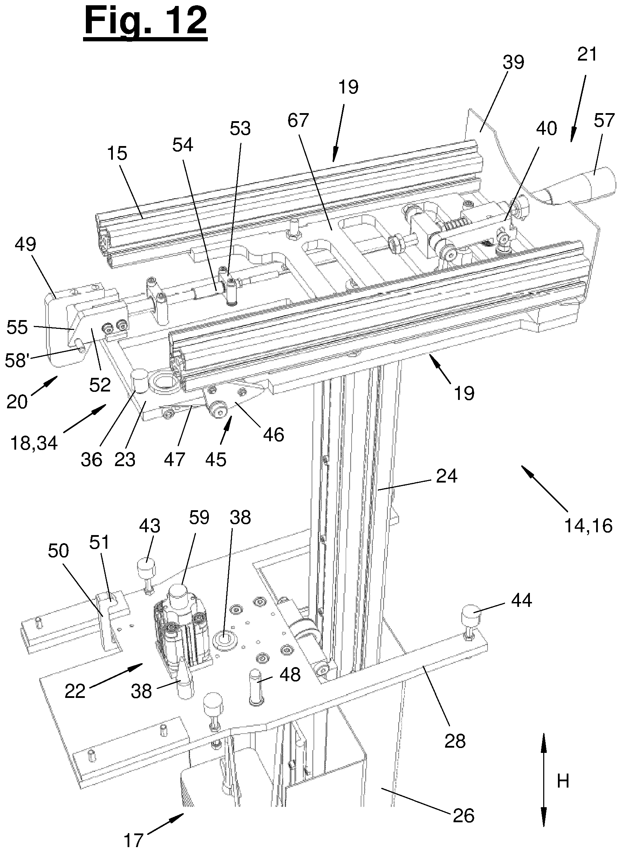

Eine obere Höhenpositionierung (36) kann z.B. bei der ersten Variante gemäß Figur 12 einen Anschlag an der Oberseite des Hubträgers (23) beinhalten, der in der oberen Hubposition an der Unterseite der Führungsbahn (7) oder des Gestells (8) anschlägt. Eine untere Höhenpositionierung (37) kann z.B. von einem gemäß Figur 9 an der Unterseite des Hubträgers (23) angeordneten Positionieranschlag gebildet werden, der mit der Steuerplattform (28) zusammenwirkt. Eine Seitenpositionierung (38) kann als Indexführung mit kegelförmigen Zapfen und entsprechenden Aufnahmeöffnungen an der Steuerplattform (28), am Hubträger (23) und an der oberen Führungsbahn (7) gebildet werden.

Das Positioniermittel (35) für den Bauteilträger (4) kann eine oder mehrere Komponenten und Funktionen haben. Es kann einerseits eine Anlaufplatte (39) am rückwärtigen und von den Führungsbahnen (6,7) abgewanden Ende des Bahnabschnitts (15) aufweisen. Die Anlaufplatte (39) begrenzt die Auffahrbewegung des Bauteilträgers (4). Ferner kann eine Fixierung (40) für den Bauteilträger (4) vorhanden sein. Diese ist z.B. in Figur 11 und 12 schematisch angedeutet und besteht aus einer federbelasteten Klinke, die am Hubträger (23) oder am Bahnabschnitt (15) angeordnet ist und die den aufgefahrenen Bauteilträger (4) in der Anschlagstellung an der Anlaufplatte (39) festhält und während des Beladens und während der Hubbewegungen sichert. Die federbelastete Klinke kann z.B. von unten her am Bauteilträger (4) rastend eingreifen.

Die Umsetzeinrichtung (14) weist eine Riegeleinrichtung (20) auf, die bevorzugt automatisch die Position des Hubträgers (23) an den Führungsbahnen (6,7) sowie in der oberen und unteren Hubposition fixieren kann. Die Riegeleinrichtung (20) kann ebenfalls unterschiedlich ausgebildet und angeordnet sein. In der gezeigten Ausführungsbeispielen weist sie obere und untere stationäre Riegelelemente (49,50) und ein mobiles Riegelelement (52) am Hubträger (23) auf. Die stationären Riegelelemente (49,50) sind jeweils als Rückhalter mit einer seitlich vorspringenden Riegelnase (51) ausgebildet. Sie sind an der Führungsbahn (7) bzw. am Gestell (8) und an der Steuerplattform (28) angeordnet. Das mobile Riegelelement (52) ist am Hubträger (23) angeordnet und ist z.B. als Schnapper ausgeführt. Das mobile Riegelelement (52) ist z.B. gemäß Figur 12 mittels einer Lagerung (53) und einer Feder (54) am Hubträger (23) geführt und mit einer Stellkraft in die Verriegelungsstellung beaufschlagt.

Das Riegelelement (52) und die Riegelnase (51) wirken über eine Keilführung (55) zusammen. Bei einer Annäherung an die Hubposition gleitet das mobile Riegelelement (52) mit seiner schrägen Anschlagfläche an der entsprechend abgeschrägten Stirnfläche der oberen oder unteren Riegelnase (51) an, weicht gegen die Kraft der Feder (54) zurück und schnappt dann hinter die Riegelnase (51). In dieser formschlüssigen Riegelstellung kann die obere Hubposition bei Auffahren eines Bauteilträgers (4) und die untere Hubposition beim Abfahren eines Bauteilträgers (4) gesichert werden.

Die Umsetzeinrichtung (14) weist eine Bedieneinrichtung (21) auf. Diese ist bevorzugt am Hubträger (23) angeordnet. Die Bedieneinrichtung (21) wirkt auf die Positioniereinrichtung (18) und/oder die Riegeleinrichtung (20). Die Bedieneinrichtung (21) kann hierfür in unterschiedlicher Weise ausgebildet sein.

Sie weist z.B. ein Bedienmittel (56) für die Riegeleinrichtung (20) auf, mit dem die Verriegelungsstellung gelöst und das mobile Riegelelement (52) außer Eingriff gebracht werden kann. Das Bedienmittel (56) ist z.B. als Handgriff ausgebildet und am rückwärtigen Ende des Hubträgers (23) angeordnet. Hierüber kann das Riegelelement (52) gegen die Kraft der Feder (54) zurückgezogen werden.

Ein anderes Bedienmittel (57) kann für das Positioniermittel (35) des Bauteilträgers (4) vorgesehen sein. Es ist z.B. als Handgriff ausgebildet, der mit der Fixierung (40) zusammenwirkt und diese gegen die rückstellende Kraft einer Feder außer Eingriff mit dem Bauteilträger (4) bringt. Hierüber kann in der unteren Hubposition eine Freigabe des Bauteilträgers (4) erfolgen.

Die Umsetzeinrichtung (14) weist eine Steuereinrichtung (22) für die Bewegungen eines Bauteilträgers (4) auf. Die Steuereinrichtung (22) kann unterschiedlich ausgebildet und angeordnet sein und kann auch unterschiedliche Funktionen haben.

Zum einen kann die Steuereinrichtung (22) eine Vereinzelungseinrichtung (58) für einen Bauteilträger (4) an einer Führungsbahn (6,7), insbesondere an der Rücklaufbahn, aufweisen. Wie Figur 9 und 11 verdeutlichen, weist die Vereinzelungseinrichtung (58) einen am Ende der Führungsbahn (7) angeordneten und um eine mittlere Querachse drehbaren Schwenkhebel mit einer Kulissenbetätigung (58') und Rückhaltern (58") an beiden Hebelenden auf. In der einen Schwenkstellung gemäß Figur 3 gibt der abgesenkte hintere Rückhalter (58") den am Ende der Führungsbahn (7) befindlichen Bauteilträger (4) frei, so dass dieser auf den Bahnabschnitt (15) auffahren kann. Zugleich wirkt der angehobene vordere Rückhalter (58") als Stopper für den nächstfolgenden Bauteilträger (4) an der Führungsbahn (7). In der anderen Schwenkstellung gemäß Figur 2 wird der vordere Rückhalter (58") gesenkt und gibt den zunächst gestoppten Bauteilträger (4) frei, der an das Ende der Führungsbahn (7) fahren kann und dort am angehobenen hinteren Rückhalter (58") angehalten wird.

Die Kulissenbetätigung (58'), welche die Schwenkbewegungen des Hebelarms der Vereinzelungseinrichtung (58) steuert, ist in Figur 9 dargestellt. Sie wirkt mit dem mobilen Riegelelement (52) am Hubträger (23) zusammen. Die Kulissenbetätigung (58') wird durch die Hebe- und Senkbewegung des Hubträgers (23) sowie die Bedieneinrichtung (21) betätigt.

Die Kulissenbetätigung (58') weist einen am rückwärtigen Hebelende angeordneten Hebelansatz mit einer schrägen und abgewinkelten Kulissenbahn auf, in die ein seitlich vom mobilen Riegelelement (52) abstehender Stift formschlüssig eingreift. Dieser Stift der Kulissenbetätigung (58') ist in Figur 12 ersichtlich. Wenn der Hubträger (23) die obere Hubposition anfährt und die vorbeschriebene Verriegelung erfolgt, taucht der besagte Stift in die Kulissenbahn ein und drückt den Hebelansatz nach unten. Hierdurch bewirkt die Kulissenbetätigung (58') die eine der Dreh- oder Schwenkbewegungen des Hebels der Vereinzelungseinrichtung (58) mit Absenken des hinteren Rückhalters (58") und Anheben des vorderen Rückhalters (58"). Beim Verlassen der oberen Hubstellung funktioniert die Kulissenbetätigung (58) in umgekehrter Weise. Der aus der Kulissenbahn austauchenden Stellstift ermöglicht die andere gegenläufige Schwenkbewegung des Hebels der Vereinzelungseinrichtung (58), was eine Freigabe des zunächst gestoppten nächstfolgenden Bauteilträgers (4) und einen erneuten Stopp am hinteren Rückhalter (58") bewirkt. Eine der Schwenkstellungen, insbesondere die letztgenante, kann mit Federkraft gesichert werden.

Die Steuereinrichtung (22) weist ferner einen steuerbaren Stopper (59) an der Steuerplattform (28) auf. Dieser Stopper (59) kann manuell vom Werker (12) oder von einer Steuerung der Zuführeinrichtung (1), der Bearbeitungsstation (2) oder dgl. betätigt werden. Er bewirkt einen Stopp und eine steuerbare Freigabe eines beladenen Bauteilträgers (4) an der unteren Hubposition und dessen Abrollen auf die Führungsbahn (6).

Die Steuereinrichtung (22) kann auch eine Detektionseinrichtung (60) aufweisen, die mit dem steuerbaren Stopper (59) bzw. dessen Steuerung zusammenwirken kann. Die Detektionseinrichtung (60) kann z.B. mittels ein oder mehrerer geeigneter Sensoren die korrekte Position des Bauteilträgers (4) am Bahnabschnitt (15) und/oder die korrekte Beladung des Bauteilträgers (4) mit ein oder mehreren Bauteilen (3) detektieren. Bei einem positiven Detektionsergebnis wird der Stopper (59) zur Freigabe angesteuert. Andernfalls erfolgt eine Alarmreaktion. Der Stopper (59) kann z.B. als ausfahrbarer Zylinder, als Stellbolzen, als Magnethalter oder dgl. ausgebildet sein.

Die in Figur 13 bis 19 dargestellte zweite Variante der Umsetzeinrichtung (14) unterscheidet sich in mehreren Punkten von der ersten Variante. Die Unterschiede betreffen insbesondere die Anordnung des Bahnabschnitts (15), die Positioniereinrichtung (18), die Schwenkeinrichtung (19), die Riegeleinrichtung (20), die Bedieneinrichtung (21) und die Steuereinrichtung (22) sowie die Dämpfeinrichtung (33). Die nachfolgend erläuterten Unterschiede können einzeln oder in beliebiger Kombination auch bei der ersten Variante eingesetzt werden.

Bei der zweiten Variante befindet sich die Schwenkachse (41) für den Bahnabschnitt (15) an dessen vorderem Endbereich, welcher den Führungsbahnen (6,7) zugewandt ist. Durch diese stark exzentrische Lagerung nimmt der frei schwenkbare Bahnabschnitt (15) bereits durch sein Eigengewicht eine Schräglage ein, die auch an die Neigung einer Führungsbahn, insbesondere der oberen Rücklaufbahn (7) angepasst sein kann. Die Schräglage kann wie in der ersten Variante durch einen rückwärtigen mobilen Anschlag (42) definiert und bedarfsweise eingestellt werden. Bei der zweiten Variante ist der mobile Anschlag (42) nicht dargestellt.

Bei dieser Ausbildung der Schwenkeinrichtung (19) mit der stark exzentrischen Anordnung der Schwenkachse (41) können die Schwenkstütze (46) und die Arretierung (45) der ersten Variante entfallen. Durch die von der Zuführbahn (6,7) schräg nach hinten und unten abfallende Schrägstellung des Bahnabschnitts (15) kann der aufgeladene Bauteilträger (4) nicht von alleine abrollen. Bei der zweiten Variante weist die Positioniereinrichtung (18) für den aufgeladenen Bauteilträger (4) ebenfalls eine rückwärtige Anlaufplatte (39) auf. Diese kann auch gemäß Figur 15 mehrfach vorhanden und/oder verstellbar sein.

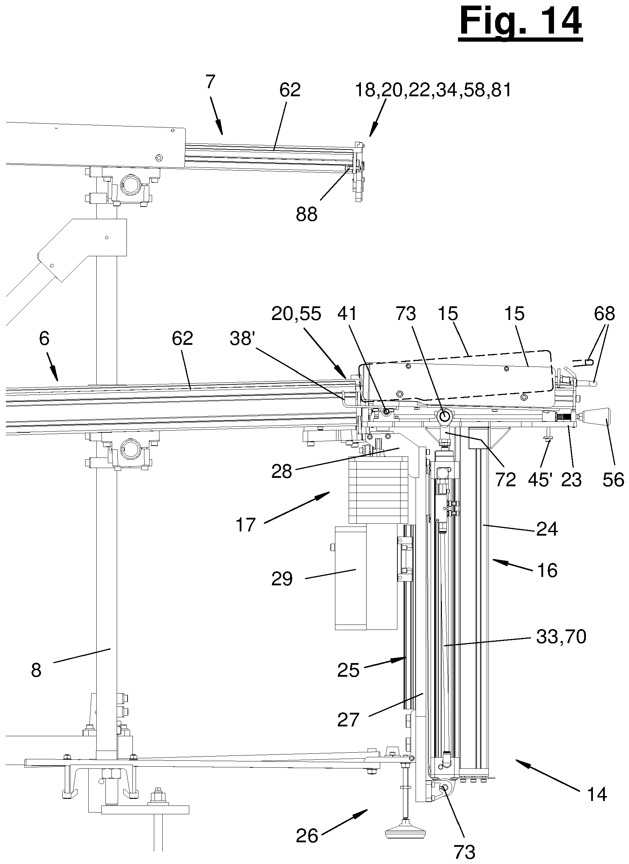

Eine weitere Änderung der Schwenkeinrichtung (19) betrifft die Anpassung der Neigung des Bahnabschnitts (15) an die andere Führungsbahn, insbesondere Zuführbahn (6). Diese Neigungsanpassung kann bei der zweiten Variante durch eine manuelle Betätigung des Bedieners bewirkt werden. Die automatische Neigungsanpassung der ersten Variante kann entfallen. Der Bediener kann mittels eines Griffs (68) am rückwärtigen Ende des Bahnabschnitts (15) diesen anheben und um die Schwenkachse (41) unter Anpassung an die Bahnneigung schwenken. Ein Begrenzer (45') am Bahnabschnitt (15) kann die Schwenkbewegung limitieren und kann z.B. an der Unterseite der Steuerplattform (28) anschlagen. Figur 14 und 18 zeigen diese manuelle Verschwenkung und Neigungsanpassung des Bahnabschnitts (15) in einer gestrichelten Darstellung.

Bei der zweiten Variante kann auch die Steuerplattform (28) abgeändert sein. Der Hubträger (23) kann an der Steuerplattform anschlagen und dort direkt aufliegen. Die mit dem Bahnabschnitt (15) zusammenwirkenden und dessen Neigung automatisch ändernden Anschläge (43,44) der ersten Variante können entfallen.

Bei der zweiten Variante kann z.B. gem. Figur 14 und 18 der hier nicht dargestellte Bauteilträger (4) in der z.B. unteren Hubstellung der Hubstütze (24) beladen werden. Der Bahnabschnitt (15) und der Bauteilträger (4) nehmen dabei durch ihre nach hinten abfallende Neigung eine ergonomisch günstige Schrägstellung ein. Nach erfolgter Beladung kann der Bediener den Bahnabschnitt (15) mit dem beladenen Bauteilträger (4) um die Achse (41) nach oben schwenken und in die Fluchtungsstellung mit der Bahnneigung der Zuführbahn (6) bringen oder etwas darüber hinaus schwenken. Der Bauteilträger (4) kann dann durch sein Eigengewicht abrollen und den Bahnabschnitt (15) verlassen.

Bei der zweiten Variante enthält die Steuereinrichtung (22) ebenfalls einen steuerbaren Stopper (59). Die Steuereinrichtung (22) kann ferner eine Vereinzelungseinrichtung (58) aufweisen. Die Steuereinrichtung (22) der zweiten Variante kann auch weiteren Komponenten, insbesondere die Detektionseinrichtung (60), wie bei der ersten Variante enthalten.

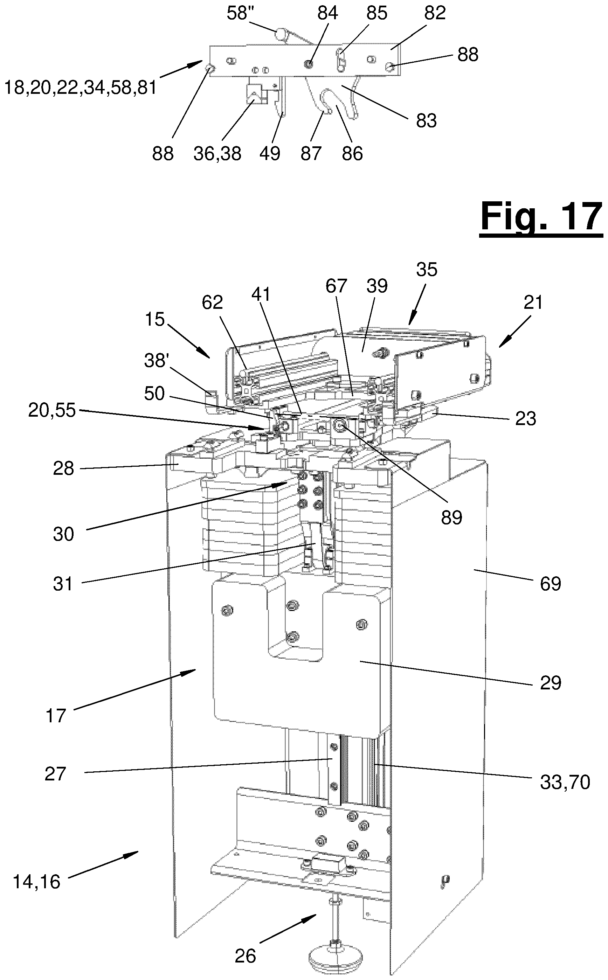

Die Positioniereinrichtung (18) für die Hubstütze (24) und die Vereinzelungseinrichtung (58) können bei der zweiten Variante abgewandelt sein. Sie können miteinander zu einer Baueinheit (81) verbunden werden. Figur 16 und 17 verdeutlichen die Ausbildung der Baueinheit (81) und ihrer Komponenten (18,58).

Die Baueinheit (81) weist einen Träger (82) auf, der am frontseitigen Ende einer Führungsbahn, insbesondere der Rücklaufbahn (7), montiert werden kann. Figur 13 und 14 zeigen diese Anordnung. Am Träger (82) sind Komponenten der Positioniereinrichtung (18) und der Vereinzelungseinrichtung (58) montiert.

Die Positioniereinrichtung (18) für die Hubstütze (24) weist bei der zweiten Variante ebenfalls ein Positioniermittel (34) auf. Das Positioniermittel (34) beinhaltet eine Höhenpositionierung (36) und eine Seitenpositionierung (38), die am Hubträger (23) frontseitig angeordnet sind. Die Höhenpositionierung (36) kann als Positionieranschlag an der Oberseite des Hubträgers (23) ausgebildet sein. Ferner kann gemäß Figur 19 eine Höhenpositionierung (37) an der Unterseite vorhanden sein.

Die Höhenpositionierung (36) und die Seitenpositionierung (38) können bei der zweiten Variante miteinander kombiniert und z.B. als Prismenanschlag ausgebildet sein, der eine mehrseitige Führung bietet. Am Träger (82) ist eine nach unten offene Prismenaufnahme und am Hubträger (23) ein hochragender Prismensockel angeordnet. In den Zeichnungen, insbesondere Figur 16 und 17, ist der Übersicht halber der Prismensockel in Eingriffsstellung mit der Prismenaufnahme sowie gelöst vom Hubträger (23) dargestellt. Bei den Ansichten des Hubträgers (23) ist der Prismensockel nicht gezeigt.

Das Positioniermittel (34) kann in der zweiten Variante eine Längspositionierung (38') aufweisen. Sie besteht z.B. aus zwei Positionierarmen, die frontseitig am Hubträger (23) angeordnet sind, wobei sie sich an den seitlichen Trägerrändern befinden und nach vorn in Richtung zu den Führungsbahnen (6,7) vorspringen. Die Positionierarme haben jeweils eine abgewinkelte Form mit einem frontseitigen und nach oben gerichteten Flansch. Dieser Flansch kann in der oberen Hubstellung z.B. einen Pin (88) an der Rückseite des Trägers (82) hintergreifen. Die Längspositionierung (38') kann dabei in Längsrichtung der besagten Führungsbahn (6,7) wirken und Stöße beim Auffahren des Bauteilträgers (4) auf dem Bahnabschnitt (15) auffangen. Die Positionierarme können außerdem jeweils außenseitig an dem benachbarten Führungsmittel (62) der Führungsbahn (6,7) vorbeigreifen und eine gewisse Führung quer zur besagten Längsrichtung bewirken.

Die Vereinzelungseinrichtung (58) weist einen Schwenkarm (83) auf, der frontseitig am Träger (82) mittels eines Lagers (84) drehbar gelagert ist. Das Lager (84) befindet sich im mittleren Bereich des Schwenkarms (83). Die Lagerachse ist in Längsrichtung der Führungsbahn, insbesondere Rücklaufbahn (7), ausgerichtet. Der Schwenkarm (83) ist z.B. als flaches Bauteil, insbesondere Blechteil, ausgebildet.

An dem unteren Ende des Schwenkarms (83) ist eine hinterschnittene Aufnahmeöffnung (86) angeordnet, die nach unten offen ist. Sie kann eine am Hubträger (23) frontseitig angeordnete Rolle (89) bei der Aufwärtsbewegung der Hubstütze (24) aufnehmen. Die Aufnahmeöffnung (86) hat eine abgewinkelte Form und erstreckt sich unter Bildung der Hinterschneidung über einen Mitnehmer (87) hinweg, der z.B. als vorspringender Stützarm ausgebildet ist. Die Rolle (89) nimmt in ihrer Aufwärtsbewegung den Schwenkarm (83) mit und dreht ihn um das Lager (84). Die Rolle (89) bewegt sich durch diese Schwenkbewegung in die Hinterschneidung der Aufnahmeöffnung (86) hinein und wird vom Mitnehmer (87) in der Endstellung untergriffen.

Die Schwenkbewegung des Schwenkarms (83) wird durch Anschlag am Träger (82) begrenzt. Hierfür kann eine gebogene Langlochführung (85) am Träger (82) vorhanden sein. An dieser z.B. oberen Hubstellung kann die Riegeleinrichtung (20) den Hubträger bzw. die Hubstützung (24) fixieren.

Der Schwenkarm (83) weist am anderen und oberen Armende einen Rückhalter (58") auf. Dieser kann als Stopper für den benachbarten Bauteilträger (4) auf der besagten Führungsbahn, insbesondere Rücklaufbahn (7), ausgebildet sein und fungieren. Der Rückhalter (58") kann gemäß Figur 16 bei einer Drehbewegung des Schwenkarms (83) in einen nach oben offenen Schlitz am oberen Rand des Trägers (82) eintauchen.

Die Positioniereinrichtung (18) und die Vereinzelungseinrichtung (58) bzw. die Baueinheit (81) können über die aufwärts und abwärts gerichtete Hubbewegung des Hubträgers (23) bzw. der Hubstütze (24) betätigt werden.

Die Höhen- und Seitenpositionierung (37,38), insbesondere der Prismenanschlag, kommen am Ende der Hubbewegung in einen bevorzugt selbstzentrierenden Eingriff. Sie begrenzen die Hubbewegung des Hubträgers (23). Sie sorgen zusammen mit der ebenfalls in Eingriff kommenden Längspositionierung (38') in der Endstellung für die Führung des Hubträgers (23) in drei verschiedenen Richtungen, wobei dieser in der Anschlussstellung an die Führungsbahn (7) exakt positioniert und fixiert ist.

Bei der in Figur 16 und 17 gezeigten Ausgangslage des Schwenkarms (83) taucht bei der aufwärts gerichteten Hubbewegung die Rolle (89) in die Aufnahmeöffnung (86) ein und dreht in der vorbeschriebenen Weise den Schwenkarm (83). Hierdurch erfolgt eine Freigabe des auf der Führungsbahn (7) wartenden und zunächst durch die Vereinzelungseinrichtung (58) blockierten Bauteilträgers (4). Bei der Schwenkbewegung des Schwenkarms (83) taucht der Rückhalter (58") nach unten weg und blockiert nicht mehr den wartenden Bauteilträger (4). Dieser kann dann durch sein Eigengewicht auf den bereitstehenden Bahnabschnitt (15) auffahren.

Bei der abwärts gerichteten Hubbewegung nach Lösen der Verriegelung (20) bewegt sich der Hubträger (23) bzw. die Hubstütze (24) durch ihr Eigengewicht und das Zusatzgewicht des aufgefahrenen Bauteilträgers (4) selbsttätig nach unten. Die Rolle (89) drückt dabei gegen den Mitnehmer (87) und dreht dadurch den Schwenkarm (83) in Gegenrichtung, bis wieder die vorbeschriebene Ausgangsstellung erreicht ist und die Rolle (89) aus der Aufnahmeöffnung (86) nach unten ausfahren kann. Bei dieser Drehbewegung des Schwenkarms (83) wird zugleich der Rückhalter (58") wieder nach oben und vor den nächsten, auf der Führungsbahn (7) wartenden Bauteilträger (4) in eine Anschlag- und Stoppstellung bewegt. Durch eine geeignete Übersetzung des Schwenkarms (83) kann dies rechtzeitig vor einem signifikanten Entfernen des Hubträgers (23) von der Führungsbahn (7) erfolgen. Die besagte Ausgangsstellung kann in geeigneter Weise gesichert werden, z.B. durch eine geeignete Gewichtsverteilung am Schwenkarm (83) oder auf andere Weise.

Die Riegeleinrichtung (20) kann bei der zweiten Variante ähnlich wie bei der ersten Variante ausgebildet sein. Sie kann obere und untere stationäre Riegelelemente (49,50) aufweisen, in die ein mobiles Riegelelement (52) an der Hubstütze (24) in der jeweiligen Hubendstellung formschlüssig eingreifen kann. Das mobile Riegelelement (52) ist am Hubträger (23) angeordnet und kann durch ein Bedienmittel (56) betätigt werden. Das Riegelelement (52) kann z.B. als stangenartiger und federbelasteter Schnapper ausgebildet sein, dessen Kopfstück mit den stationären Riegelelementen (49,50) in Eingriff tritt. Das z.B. als Handgriff ausgebildete Bedienmittel (56) ist am hinteren Ende des Hubträgers (23) angeordnet und ist am hinteren Ende des stangenartigen mobilen Riegelelements (52) montiert. Die Riegelelemente (49,50,52) können wie bei der ersten Variante eine Riegelnase (51) und eine Keilführung (55) oder ein anderes Stellmittel aufweisen.

Figur 16 und 17 verdeutlichen außerdem, dass die Umsetzeinrichtung (14) ein schützendes Gehäuse (69) aufweisen kann. Dieses kann die Basis (26) bzw. den Ständer (27) und ggf. auch die Dämpfeinrichtung (33) seitlich umgeben und z.B. auch zumindest bereichsweise nach oben abdecken. Hierdurch kann auch der passive Energiespeicher (17) eingehaust werden. Dieser kann bei der zweiten Variante in gleicher Weise wie bei der vorbeschriebenen ersten Variante ausgebildet sein.

Bei der zweiten Variante kann die Basis (26) gegenüber der ersten Variante abgewandelt werden. Der Ständer (27) ist z.B. schlank ausgebildet und mit einem eigenen Stützfuß am Boden abgestützt. Zur Basis (26) können außerdem in Figur 13 und 14 gezeigte Streben gehören, welche den Stützfuß mit dem Gestell (8) der Zuführeinrichtung (1) verbinden.

In Figur 13 bis 15 der zweiten Variante ist die Anordnung und Ausbildung einer Dämpfeinrichtung (33) beispielhaft dargestellt. Diese ist z.B. als aufrechter Zylinder (70) mit einer Drosselanordnung (77) und einer Leitungsanordnung (76) ausgebildet. Der Zylinder (70) kann an der Basis (26), insbesondere am Ständer (27) angeordnet sein. Er kann auch mit der Führungseinrichtung (25) in Verbindung stehen. Der Zylinder weist einen Kolben (71) und eine Kolbenstange (72) auf, die z.B. am oberen Ende aus dem Zylinder (70) herausragt und mit einem Anschluss (73), z.B. einem Lagerauge, mit dem Hubträger (23) oder einem anderen Teil der Hubstütze (24) verbunden ist. Die gezeigte Dämpfeinrichtung (33) wirkt dadurch direkt auf die Hubbewegungen der Hubstütze (24) ein und dämpft diese. Die Dämpfeinrichtung (33) kann einstellbar sein. Sie kann insbesondere auf unterschiedliche Arten und Gewichte von Bauteilträgern (4) bedarfsweise eingestellt werden.

Figur 20 und 21 verdeutlichen schematisch eine Ausbildung und Beschaltung des Zylinders (70). Dieser weist einen Arbeitsraum (74) oberhalb des Kolbens (71) und einen Arbeitsraum (75) unterhalb des Kolbens (71) auf. Die Arbeitsräume (74,75) sind an eine Leitungsanordnung (76) und eine Drosselanordnung (77) angeschlossen. Diese sind in Figur 20 und 21 unterschiedlich ausgebildet.

Bei der Variante von Figur 20 sind die Arbeitsräume (74,75) durch diese außerhalb des Zylinders (70) befindliche Leitungsanordnung (76) untereinander verbunden. Die Leitungsanordnung (76) weist in diesem Fall eine einzelne Verbindungsleitung auf.

Die Drosselanordnung (77) ist in der Leitungsanordnung (76) bzw. der einzelnen Verbindungsleitung angeordnet. Sie weist zwei Drosselventile (78) und zwei Rückschlagventile (79) auf, die das umgepumpte Fluid, insbesondere Luft, richtungsabhängig drosseln. Die Rückschlagventile (79) sind zu diesem Zweck entgegengesetzt gerichtet. Die Drosselventile (78) können unterschiedlich ausgebildet sein. Sie können auch verstellbar sein. Hierdurch lassen sich unterschiedliche Drossel- und Dämpfwirkungen für die aufwärts und die abwärts gerichtete Hubbewegung bzw. Kolbenstangenbewegung erzeugen.

Die Leitungsanordnung (76) kann außerdem mit einer Lüftung (80) verbunden sein. Diese kann z.B. am oberen Leitungsbereich und oberhalb der Drosselanordnung (77) angeordnet sein. Die Lüftung (80) kann manuell durch einen federbelasteten Taster betätigt werden. Sie kann alternativ automatisch angesteuert werden.

Die Lüftung (80) kann unterschiedliche Funktionen haben, die sich je nach Kolbenstellung unterscheiden. Wenn bei einer oberen Stellung des Kolbens (71) entlüftet wird, spielt das Volumen der Kolbenstange (72) im verkleinerten oberen Arbeitsraum (74) keine wesentliche Rolle. Hierdurch kann ein Druckausgleich im gesamten Zylinder (70) erfolgen. Bei einer Betätigung der Lüftung (80) in der in Figur 20 gezeigten unteren Stellung des Kolbens (71) kann im unteren Arbeitsraum (75) wegen des besagten Stangenvolumens ein Unterdruck bei der anschließenden Hubbewegung erzeugt werden. Das aus dem oberen Arbeitsraum (74) umgepumpte Gasvolumen ist wegen des Stangenvolumens kleiner als die bei der Kolbenbewegung entstehende Vergrößerung des unteren Arbeitsraums (75).

Bei der gezeigten Kolbenausrichtung mit der nach oben aus dem aufrechten Zylinder (70) austretenden Kolbenstange (72) kann sich außerdem ein Unterstützungseffekt für die Hubbewegung ergeben. Durch das besagte Stangenvolumen ist die wirksame Kolbenfläche an der Oberseite des Kolbens (71) kleiner als an der Unterseite. Bei gleichem Druck in den Arbeitsräumen (74,75) sorgt dies für eine aus dem Druck resultierende Kraft, die an der Kolbenunterseite größer als an der Kolbenoberseite ist. Hierdurch wird die Ausfahrbewegung der Kolbenstange (72) und die nach oben gerichtete Hubbewegung des Hubträgers (24) unterstützt. Diese resultierende Kraft wirkt zusätzlich zu der Krafteinwirkung aus dem passiven Energiespeicher (17).

Wenn die Drücke in den Arbeitsräumen (74,75) unterschiedlich sind, z.B. je nach Art der Lüftungsbetätigung, kann die Entstehung und Wirkung der resultierenden und am Kolben (71) wirkenden Druckkraft anders sein.

Figur 21 zeigt eine andere und eingangs erwähnte Variante eines gedrosselten Zylinders (70). Die Arbeitsräume (74,75) sind hierbei über die Leitungsanordnung (76) mit der äußeren Umgebung und der Umgebungsluft verbunden. Die Leitungsanordnung (76) weist dabei jeweils eine eigene Leitung für die Arbeitsräume (74,75) auf.

Je nach Bewegungsrichtung des Kolbens (71) wird aus dem einen Arbeitsraum (74,75) das Fluid, insbesondere Luft, mit Drosselung in die Umgebung ausgeblasen und gleichzeitig in den anderen Arbeitsraum (75,74) ein Fluid, insbesondere Luft, aus der Umgebung eingesaugt. Das Einsaugen kann ebenfalls gedrosselt erfolgen. Die Drosselwirkungen beim Ausblasen und Einsaugen können unterschiedlich eingestellt werden. Bei Umkehr der Kolbenbewegung kehren sich auch die Strömungs- und Pumprichtung entsprechend um. Die in den einzelnen Leitungen angeordneten Drosselanordnungen (77), die ebenfalls jeweils aus zwei Paarungen von Drosselventil (78) und Rückschlagventil (79) bestehen, kann eine unterschiedliche Drossel- und Dämpfwirkung für die aufwärts- und abwärtsgerichtete Hubbewegung der Kolbenstange (72) und der Hubstütze (24) eingestellt werden.

In den Ausführungsbeispielen von Figur 20 und 21 kann die Ausrichtung des Zylinders (70) auch in anderer Weise gewählt werden. Sie kann insbesondere umgedreht werden, wobei die Kolbenstange (72) nach unten ausfährt. Hierdurch lassen sich andere Arten von Kraftunterstützungen und Dämpfwirkungen erzeugen.

Figur 2 zeigt beispielhaft in einer transparenten Darstellung die Ausbildung eines Bauteilträgers (4). Dieser weist z.B. einen Korpus (65) auf, der als quaderförmiges, abgekantetes und dünnwandiges Blechgehäuse ausgebildet ist, welches nach unten offen ist und an der Oberseite eine Anbaufläche für ein oder mehrere der in Figur 1 dargestellten Bauteilaufnahmen (5), ggf. mit rasterartigen Verbindungsstellen, aufweist.

Der Korpus (65) weist an mindestens einer Stirnseite, z.B. der Vorderseite, einen oder mehrere Puffer auf, die Stöße absorbieren und die auch für eine axiale Beabstandung aufeinander folgender Bauteilträger (4) sorgen können. Dies ist für die Vereinzelungsvorrichtung (58) günstig. Der Korpus (65) kann unterschiedliche Längen haben. Die Komponenten der Umsetzeinrichtung (14) können entsprechend ausgelegt sein.

Die Rollkörper oder Räder (61) sind an den Eckbereichen des Korpus (65) und an den abgekanteten Seitenwänden gelagert und drehen sich um eine quer zur jeweiligen Laufrichtung (V,R) gerichtete Achse (63).

Gemäß Figur 2 können an einer oder beiden Längsseiten des Korpus (65) die Räder (61) eine unebene und an ein ebenfalls unebenes Führungsmittel (62) angepasste Umfangskontur aufweisen, die z.B. als gerundete Umfangsnut (64) ausgebildet ist. Das Führungsmittel (62) kann ein Tragprofil mit einer gerundeten, insbesondere rundstabförmigen, Schiene an der Oberseite aufweisen, die formschlüssig mit der Nut (64) im Eingriff steht. An der anderen Korpusseite können die Räder (61) eine zylindrische Lauffläche aufweisen, die keinen Formschluss zum Führungsmittel (62) haben muss, welches hier ebenfalls als gerundete und eingebettete Schiene ausgebildet sein kann. Die Räder (61) können alternativ einen randseitigen Führungsbund aufweisen.

Die Rollkörper (61) können frei drehbar sein. Alternativ kann ein oder mehreren Rollkörpern (61) eine Bremseinrichtung (66), insbesondere eine generatorische Bremse zugeordnet sein, die lauf- und drehrichtungsabhängig einstellbar oder steuerbar und außerdem an unterschiedliche Neigungswinkel der Führungsbahnen (6,7) anpassbar ist. Eine generatorische Bremse kann z.B. durch einen vom Rollkörper angetriebenen Generator, vorzugsweise Gleichstromgenerator, und einen Laststromkreis mit ein oder mehreren Leistungsaufnehmern, z.B. ohmschen Widerständen, in gegebenenfalls schaltbarer Anordnung, gebildet werden. Figur 2 zeigt diese Anordnung.

Abwandlungen der gezeigten und beschriebenen Ausführungsformen sind in verschiedener Weise möglich. Die vorgenannten Komponenten der Umsetzeinrichtung (14), insbesondere der Hubeinrichtung (16), sowie der Zuführeinrichtung (1) können konstruktiv abgewandelt werden. Ferner ist es möglich, die vorbeschriebenen Merkmale der Ausführungsbeispiele und die erwähnten Varianten beliebig miteinander zu kombinieren und gegebenenfalls auch zu vertauschen.

Der passive Energiespeicher (17) kann ein anderes Speicherelement aufweisen, z.B. eine Feder, insbesondere eine Gasfeder. Die Anordnung der Führungsbahnen (6,7) und die Kinematik der Umsetzeinrichtung (14) kann vertauscht werden. Hierbei kann ein an der unteren Rücklaufbahn (7) ankommender Bauteilträger (4) vom Bahnabschnitt (15) in der unteren Hubposition aufgenommen und dann in die obere Hubposition zur Abgabe an die Zuführbahn (6) angehoben werden. Die Beladung mit Bauteilen kann an einer der beiden Hubpositionen oder Endlagen oder an einer Zwischenstellung erfolgen. Der passive Energiespeicher (17) kann bei der Hubbewegung unterstützend wirken. Bei der Senkbewegung kann er eventuell mit zusätzlicher Handkraft und Niederdrücken des Hubträgers (23) geladen werden. Die vorerwähnte Zwischenstellung kann in den verschiedenen Ausführungsformen an einer oder mehreren wählbaren Stellen des Hubwegs vorhanden sein. Sie kann in geeigneter Weise definiert werden, z.B. mittels einer federnden Rastposition an der Führungseinrichtung (25).

Ferner können die Umsetzeinrichtung (14) und das Umsetzverfahren auch zum Entladen von beladenen Bauteilträgern (4) an der Endladestelle (11) eingesetzt werden. Das Beladen und Entladen kann in einer weiteren Abwandlung maschinell, z.B. durch einen Handlingroboter, erfolgen. Ein Be- und Entladevorgang kann unter Umständen auch entfallen.

### BEZUGSZEICHENLISTE

- 1: Zuführeinrichtung
- 2: Bearbeitungsstation
- 3: Bauteil
- 4: Bauteilträger, Transportwagen
- 5: Bauteilaufnahme
- 6: Führungsbahn, Zuführbahn
- 7: Führungsbahn, Rücklaufbahn
- 8: Gestell
- 9: Schutzeinrichtung, Zaun
- 10: Beladestelle
- 11: Entladestelle
- 12: Werker
- 13: Bearbeitungseinrichtung, Roboter
- 14: Umsetzeinrichtung
- 15: Bahnabschnitt, Endabschnitt
- 16: Hubeinrichtung
- 17: Energiespeicher
- 18: Positioniereinrichtung
- 19: Schwenkeinrichtung
- 20: Riegeleinrichtung
- 21: Bedieneinrichtung
- 22: Steuereinrichtung
- 23: Hubträger, Hubbühne
- 24: Hubstütze
- 25: Führungseinrichtung
- 26: Basis
- 27: Ständer
- 28: Steuerplattform
- 29: Gegengewicht
- 30: Übersetzung
- 31: Treibmittel, Riemen
- 32: Umlenkung
- 33: Dämpfeinrichtung
- 34: Positioniermittel Hubeinrichtung
- 35: Positioniermittel Bauteilträger
- 36: Höhenpositionierung, Positionieranschlag oben
- 37: Höhenpositionierung, Positionieranschlag unten
- 38: Seitenpositionierung, Index
- 38': Längspositionierung
- 39: Anlaufplatte
- 40: Fixierung
- 41: Schwenkachse
- 42: Anschlag mobil
- 43: Anschlag stationär, vorn
- 44: Anschlag stationär, hinten
- 45: Arretierung
- 45': Begrenzer
- 46: Schwenkstütze
- 47: Feder
- 48: Steller
- 49: Riegelelement stationär, Rückhalter oben
- 50: Riegelelement stationär, Rückhalter unten
- 51: Riegelnase
- 52: Riegelelement mobil, Schnapper
- 53: Lagerung
- 54: Feder
- 55: Stellmittel, Keilführung
- 56: Bedienmittel für Riegeleinrichtung, Handgriff
- 57: Bedienmittel für Arretierung, Handgriff
- 58: Vereinzelungseinrichtung
- 58': Kulissenbetätigung
- 58": Rückhalter
- 59: Stopper, steuerbar
- 60: Detektionseinrichtung
- 61: Gleitmittel, Rollkörper, Rad
- 62: Führungsmittel, Schiene
- 63: Achse
- 64: Nut
- 65: Korpus
- 66: Bremseinrichtung generatorisch
- 67: Verbindungsmittel, Steg, Rahmen
- 68: Griff, Schwenkgriff
- 69: Gehäuse
- 70: Zylinder
- 71: Kolben
- 72: Kolbenstange
- 73: Anschluss
- 74: Arbeitsraum oben
- 75: Arbeitsraum unten
- 76: Leitungsanordnung
- 77: Drosselanordnung
- 78: Drosselventil
- 79: Rückschlagventil
- 80: Lüftung
- 81: Baueinheit
- 82: Träger
- 83: Schwenkarm
- 84: Lager
- 85: Langlochführung
- 86: Aufnahmeöffnung
- 87: Mitnehmer
- 88: Pin
- 89: Rolle

- H: Hubachse
- V: Bewegungsrichtung vorwärts
- R: Bewegungsrichtung rückwärts

## Patentansprüche

1. Umsetzeinrichtung für eine Zuführeinrichtung (1) mit unterschiedlich geneigten Führungsbahnen (6,7) und einem mobilen, mit den Führungsbahnen (6,7) verbindbaren rollenden Bauteilträger (4) für ein Bauteil (3), wobei die Umsetzeinrichtung (14) eine manuell bedienbare Hubeinrichtung (16) mit einer aufrechten linearen Hubachse (H) und mit einem an die Führungsbahnen (6,7) fluchtend anschließbaren Bahnabschnitt (15) aufweist, wobei die Hubeinrichtung (16) eine Basis (26) mit einem daran höhenverstellbar angeordneten, gestellartigen Hubträger (23) mit einer Schwenkeinrichtung (19) aufweist, wobei der Hubträger (23) quer oder schräg zur Hubachse (H) ausgerichtet ist und der Bahnabschnitt (15) mittels der Schwenkeinrichtung (19) schwenkbar am Hubträger (23) gelagert ist, wobei die Umsetzeinrichtung (14) eine mit der Basis (26) verbundene und mit dem Hubträger (23) zusammenwirkende Steuerplattform (28), die an einer Führungsbahn (6,7) angeordnet werden kann, aufweist, wobei die Umsetzeinrichtung (14) eine Steuereinrichtung (22) für die Bewegungen eines Bauteilträgers (4) aufweist und
die Steuereinrichtung (22) einen steuerbaren Stopper (59) an der Steuerplattform (28) aufweist.

2. Umsetzeinrichtung nach Anspruch 1, **dadurch gekennzeichnet, dass** für das Aufnehmen und Abgeben der Bauteilträger (4) auf und von dem Bahnabschnitt (15) stationäre Führungsmittel (62) am Bahnabschnitt (15) angeordnet sind.

3. Umsetzeinrichtung nach Anspruch 1 oder 2, **dadurch gekennzeichnet, dass** der Hubträger (23) auf einer aufrechten Hubstütze (24) angeordnet ist, die an der Basis (26) entlang der linearen Hubachse (H) höhenverstellbar geführt ist.

4. Umsetzeinrichtung nach Anspruch 3, **dadurch gekennzeichnet, dass** die Steuerplattform (28) an der von der Umsetzeinrichtung ausgehenden und abwärts gerichteten Führungsbahn, insbesondere Zuführbahn (6), angeordnet werden kann und die an der Oberseite der Basis (26) stationär ausgeordnet und montiert ist, wobei die Steuerplattform (28) quer oder schräg zur Hubachse (H) ausgerichtet ist und einen gabelförmigen Endbereich aufweist, der einen Durchtritt der Hubstütze (24) ermöglicht.

5. Umsetzeinrichtung nach Anspruch 2 und 4, **dadurch gekennzeichnet, dass** die Schwenkeinrichtung (19) durch das Eigengewicht des Bauteilträgers (4) und durch ein oder mehrere mobile Anschläge (42) am Hubträger (23) sowie durch mehrere stationäre Anschläge (43,44) an der Steuerplattform (28) betätigbar ist, wobei an der Steuerplattform (28) vier stationäre Anschläge (43,44) im Viereck derart angeordnet sind, das sie seitlich am Hubträger (23) vorbei greifen und die Führungsmittel (62) des Bahnabschnitts (15) kontaktieren können.

6. Umsetzeinrichtung nach einem der Ansprüche 1 bis 5, **dadurch gekennzeichnet, dass** die Steuereinrichtung (22) eine Vereinzelungseinrichtung (58) für einen Bauteilträger (4) an einer Führungsbahn (7) aufweist.

7. Umsetzeinrichtung nach Anspruch 6, **dadurch gekennzeichnet, dass** die Vereinzelungseinrichtung (58) und eine Positioniereinrichtung (18), insbesondere ein Positioniermittel (34), für die Positionierung des Hubträgers (23) an zumindest einer der Führungsbahnen (6,7), zu einer Baueinheit (81) verbunden sind.

8. Umsetzeinrichtung nach einem der Ansprüche 1 bis 7, **dadurch gekennzeichnet, dass** der steuerbare Stopper (59) einen mit Bauteilen beladenen Bauteilträger erst nach Durchlaufen einer Sicherheitsprüfung vollautomatisch und/oder durch manuelle Bedienung freigibt.

9. Zuführeinrichtung für Bauteile (3) mit unterschiedlich geneigten Führungsbahnen (6,7) und mindestens einem mobilen, mit den Führungsbahnen (6,7) verbindbaren rollenden Bauteilträger (4) für ein Bauteil (3), wobei die Zuführeinrichtung (1) eine Beladestelle (10) mit einer Umsetzeinrichtung (14) zum Beladen und Umsetzen eines Bauteilträgers (4) zwischen den Führungsbahnen (6,7) aufweist, **dadurch gekennzeichnet, dass** die Umsetzeinrichtung (14) nach mindestens einem der Ansprüche 1 bis 8 ausgebildet ist.

10. Zuführeinrichtung nach Anspruch 9, **dadurch gekennzeichnet, dass** der oder die Bauteilträger (4) und die Führungsbahn (6) zusammenwirkende Gleit- und Führungsmittel (61,62) aufweisen, wobei die Gleitmittel (61) als Räder und die Führungsmittel (62) als Schienen ausgebildet sind.

11. Bearbeitungsstation mit einer Zuführeinrichtung (1) für Bauteile (3), welche sich durch eine Öffnung in einer die Bearbeitungsstation (2) umgebenden Schutzeinrichtung (9) erstreckt, wobei die Zuführeinrichtung (1) unterschiedlich geneigte Führungsbahnen (6,7) und mindestens einen mobilen, mit den Führungsbahnen (6,7) verbindbaren rollenden Bauteilträger (4) für ein Bauteil (3) sowie eine Beladestelle (10) mit einer Umsetzeinrichtung (14) zum Beladen und Umsetzen eines Bauteilträgers (4) zwischen den Führungsbahnen (6,7) aufweist, **dadurch gekennzeichnet, dass** die Zuführeinrichtung (1) nach mindestens einem der Ansprüche 9 bis 10 ausgebildet ist.

## Claims

1. Transfer device for a feed device (1) with differently inclined guide tracks (6, 7) and a mobile rolling component carrier (4), which can be connected to the guide tracks (6, 7), for a component (3), wherein the transfer device (14) comprises a manually operable lifting device (16) with an upright linear lifting axis (H) and with a track portion (15) which can be connected to the guide tracks (6, 7) in an aligned manner, wherein the lifting device (16) has a base (26) with a frame-like lifting carrier (23) which is arranged thereon in a height-adjustable manner and has a pivoting device (19), wherein the lifting carrier (23) is oriented transversely or obliquely with respect to the lifting axis (H), and the track portion (15) is mounted pivotably on the lifting carrier (23) by means of the pivoting device (19), wherein the transfer device (14) has a control platform (28) which is connected to the base (26), interacts with the lifting carrier (23), and can be guided on a guide track (6, 7), wherein the transfer device (14) has a control device (22) for the movements of a component carrier (4), and
the control device (22) has a controllable stopper (59) on the control platform (28).

2. Transfer device according to Claim 1, **characterized in that** stationary guide means (62) are arranged on the track portion (15) for receiving and discharging the component carriers (4) onto and from the track portion (15).

3. Transfer device according to Claim 1 or 2, **characterized in that** the lifting carrier (23) is arranged on an upright lifting support (24) which is guided on the base (26) in a height-adjustable manner along the linear lifting axis (H).

4. Transfer device according to Claim 3, **characterized in that** the control platform (28) can be arranged on the guide track, in particular feed track (6), which extends from the transfer device and is directed downwards, and is arranged and mounted in a stationary manner on the upper side of the base (26), wherein the control platform (28) is oriented transversely or obliquely with respect to the lifting axis (H) and has a fork-shaped end region which allows the lifting support (24) to pass through.

5. Transfer device according to Claims 2 and 4, **characterized in that** the pivoting device (19) can be actuated by the dead weight of the component carrier (4) and by one or more mobile stops (42) on the lifting carrier (23) and by a plurality of stationary stops (43, 44) on the control platform (28), wherein four stationary stops (43, 44) are arranged on the control platform (28) in a quadrilateral in such a way that they can engage laterally past the lifting carrier (23) and can make contact with the guide means (62) of the track portion (15).

6. Transfer device according to one of Claims 1 to 5, **characterized in that** the control device (22) has a separating device (58) for a component carrier (4) on a guide track (7).

7. Transfer device according to Claim 6, **characterized in that** the separating device (58) and a positioning device (18), in particular a positioning means (34), for positioning the lifting carrier (23) on at least one of the guide tracks (6, 7), are connected to form one structural unit (81).

8. Transfer device according to one of Claims 1 to 7, **characterized in that** the controllable stopper (59) releases a component carrier loaded with components fully automatically and/or by manual operation only after running through a safety check.

9. Feed device for components (3) with differently inclined guide tracks (6, 7) and at least one mobile rolling component carrier (4), connectable to the guide tracks (6, 7), for a component (3), wherein the feed device (1) has a loading point (10) with a transfer device (14) for loading and transferring a component carrier (4) between the guide tracks (6, 7), **characterized in that** the transfer device (14) is designed according to at least one of Claims 1 to 8.

10. Feed device according to Claim 9, **characterized in that** the component carrier or carriers (4) and the guide track (6) have interacting sliding and guide means (61, 62), wherein the sliding means (61) are formed as wheels and the guide means (62) are formed as rails.

11. Processing station having a feed device (1) for components (3), which feed device extends through an opening in a protective device (9) surrounding the processing station (2), wherein the feed device (1) has differently inclined guide tracks (6, 7) and at least one mobile rolling component carrier (4), which can be connected to the guide tracks (6, 7), for a component (3), and a loading point (10) with a transfer device (14) for loading and transferring a component carrier (4) between the guide tracks (6, 7), **characterized in that** the feed device (1) is designed according to at least one of Claims 9 to 10.

## Revendications

1. Dispositif de transfert destiné à un dispositif d'alimentation (1) comportant des voies de guidage (6, 7) inclinées différemment et un support de composants (4) mobile roulant pouvant être relié aux voies de guidage (6, 7) et destiné à un composant (3), le dispositif de transfert (14) comportant un dispositif de levage (16) à commande manuelle comprenant un axe de levage (H) linéaire vertical et une section de voie (15) pouvant être raccordée de manière alignée aux voies de guidage (6, 7), le dispositif de levage (16) comportant une base (26) munie d'un support de levage (23) en forme de cadre, agencé sur celle-ci de manière réglable en hauteur, qui comprend un dispositif pivotant (19), le support de levage (23) étant orienté transversalement ou obliquement par rapport à l'axe de levage (H) et la section de voie (15) étant montée sur le support de levage (23) de manière pivotante au moyen du dispositif pivotant (19), le dispositif de transfert (14) comportant une plate-forme de commande (28) reliée à la base (26) et coopérant avec le support de levage (23), qui peut être agencée sur une voie de guidage (6, 7), le dispositif de transfert (14) comportant un dispositif de commande (22) destiné aux mouvements d'un support de composants (4) et
le dispositif de commande (22) comportant une butée commandable (59) sur la plate-forme de commande (28).

2. Dispositif de transfert selon la revendication 1, **caractérisé en ce que** des moyens de guidage (62) stationnaires sont agencés sur la section de voie (15) pour la prise et la dépose des supports de composants (4) sur et depuis la section de voie (15).

3. Dispositif de transfert selon la revendication 1 ou 2, **caractérisé en ce que** le support de levage (23) est agencé sur un support de levage vertical (24) qui est guidé sur la base (26) le long de l'axe de levage (H) linéaire de manière réglable en hauteur.

4. Dispositif de transfert selon la revendication 3, **caractérisé en ce que** la plateforme de commande (28) peut être agencée sur la voie de guidage, en particulier la voie d'alimentation (6), partant du dispositif de transfert et dirigée vers le bas, et qui est agencée et montée de manière stationnaire sur la face supérieure de la base (26), la plate-forme de commande (28) étant orientée transversalement ou obliquement par rapport à l'axe de levage (H) et comportant une zone d'extrémité en forme de fourche qui permet le passage du support de levage (24).

5. Dispositif de transfert selon les revendications 2 et 4, **caractérisé en ce que** le dispositif pivotant (19) peut être actionné par le poids propre du support de composants (4) et par une ou plusieurs butées mobiles (42) sur le support de levage (23) ainsi que par plusieurs butées stationnaires (43, 44) sur la plateforme de commande (28), quatre butées stationnaires (43, 44) étant agencées en quadrilatère sur la plate-forme de commande (28) de manière à ce qu'elles puissent s'engager latéralement sur le support de levage (23) et venir au contact des moyens de guidage (62) de la section de voie (15).

6. Dispositif de transfert selon l'une quelconque des revendications 1 à 5, **caractérisé en ce que** le dispositif de commande (22) comporte sur une voie de guidage (7) un dispositif de séparation (58) destiné à un support de composants (4).

7. Dispositif de transfert selon la revendication 6, **caractérisé en ce que** le dispositif de séparation (58) et un dispositif de positionnement (18), en particulier un moyen de positionnement (34) destiné au positionnement du support de levage (23) sur au moins l'une des voies de guidage (6, 7), sont reliés pour former une unité structurelle (81).

8. Dispositif de transfert selon l'une quelconque des revendications 1 à 7, **caractérisé en ce que** la butée commandable (59) ne libère un support de composants chargé de composants qu'après qu'après exécution d'un contrôle de sécurité, de manière entièrement automatique et/ou au moyen d'une commande manuelle.

9. Dispositif d'alimentation pour composants (3) comportant des voies de guidage (6, 7) inclinées différemment et au moins un support de composants (4) mobile roulant pouvant être relié aux voies de guidage (6, 7) et destiné à un composant (3), le dispositif d'alimentation (1) comportant un poste de chargement (10) muni d'un dispositif de transfert (14) destiné à charger et à transférer un support de composant (4) entre les voies de guidage (6, 7), **caractérisé en ce que** le dispositif de transfert (14) est conçu selon au moins l'une des revendications 1 à 8.

10. Dispositif d'alimentation selon la revendication 9, **caractérisé en ce que** le ou les supports de composants (4) et la voie de guidage (6) comportent des moyens de coulissement et de guidage (61, 62) coopérant entre eux, les moyens de coulissement (61) étant réalisés sous la forme de roues et les moyens de guidage (62) étant réalisés sous la forme de rails.

11. Station de traitement comportant un dispositif d'alimentation (1) pour composants (3), qui s'étend à travers une ouverture ménagée dans un dispositif de protection (9) entourant la station de traitement (2), le dispositif d'alimentation (1) comportant des voies de guidage (6, 7) inclinées différemment et au moins un support de composants (4) mobile roulant pouvant être relié aux voies de guidage (6, 7) et destiné à un composant (3), ainsi qu'un poste de chargement (10) comprenant un dispositif de transfert (14) destiné à charger et à transférer un support de composants (4) entre les voies de guidage (6, 7), **caractérisé en ce que** le dispositif d'alimentation (1) est conçu selon au moins l'une des revendications 9 à 10.
